# EUROPEAN PATENT APPLICATION

(11) **EP 4 718 906 A1**
(43) Date of publication of application: **01.04.2026**
(21) Application number: 25189597.5
(22) Date of filing: 15.07.2025
(51) Int. Cl.: H04W 28/06, H04W 28/02

(54) **APPARATUS, SYSTEM, AND METHOD OF SIGNALING SEGMENT-ASSOCIATION-INFORMATION (SAI) QUEUE-SIZE INFORMATION FOR COMMUNICATION OF APPLICATION LAYER PACKETS**

(30) Priority: 26.09.2024 US 202418898514
(71) Applicant: INTEL Corporation, Santa Clara, CA 95054 (US)
(72) Inventor: MERWADAY, Arvind, Beaverton (US); VANNITHAMBY, Rath, Portland, 97229 (US); DAS, Didakar, Hillsboro (US); CAVALCANTI, Dave, Portland (US); CANPOLAT, Necati, Beaverton, 97006 (US)
(74) Representative: Viering, Jentschura & Partner mbB Patent- und Rechtsanwälte

(57) **Abstract**

For example, an apparatus may include logic and circuitry configured to cause a non Access Point (AP) (non-AP) station (STA) to set one or more Segment-Association-Information (SAI) queue-size subfields in a control field. For example, the one or more SAI queue-size subfields may indicate queue sizes of one or more SAI queues at the non-AP STA. For example, an SAI queue of the one or more SAI queues may queue packet segments corresponding to a same application layer packet. For example, the non-AP STA may be configured to transmit a frame to an AP, wherein a Media Access Control (MAC) header of the frame includes the control field.

## Description

### BACKGROUND

A Wireless Local Area network (WLAN) may include an Access Point (AP), which may communicate with one or more non-AP stations. For example, an AP and a non-AP station may be required to communicate, for example, according to a WLAN communication standard.

### BRIEF DESCRIPTION OF THE DRAWINGS

For simplicity and clarity of illustration, elements shown in the figures have not necessarily been drawn to scale. For example, the dimensions of some of the elements may be exaggerated relative to other elements for clarity of presentation. Furthermore, reference numerals may be repeated among the figures to indicate corresponding or analogous elements. The figures are listed below.
Fig. 1 is a schematic block diagram illustration of a system, in accordance with some demonstrative aspects.
Fig. 2 is a schematic illustration of uplink communications in wireless networks of an industrial use case, in accordance with some demonstrative aspects.
Figs. 3A is a schematic illustration of simulated throughput as a function of a number of cameras in a system, and Fig. 3B is a schematic illustration of a simulated uplink application packet latency Cumulative Distribution Function (CDF) as a function of the number of cameras in the system, to illustrate one or more technical aspects, which may be addressed in accordance with some demonstrative aspects.
Fig. 4A is a schematic illustration of scheduling goal-oriented communications via an application layer control signaling, to illustrate one or more technical aspects, which may be addressed in accordance with some demonstrative aspects.
Fig. 4B is a schematic illustration of scheduling goal-oriented communications via a lower-layer control signaling, in accordance with some demonstrative aspects.
Fig. 5 is a schematic illustration of an extended Buffer Status Report (eBSR) control frame field, in accordance with some demonstrative aspects.
Fig. 6 is a schematic illustration of a trigger dependent user info field according to an enhanced trigger frame format, in accordance with some demonstrative aspects.
Fig. 7 is a schematic illustration of a stateful packet inspection at a Wireless Local-Area Network (WLAN) layer, in accordance with some demonstrative aspects.
Fig. 8A is a schematic illustration of simulated throughput and latency as a function of a number of cameras in a system, and Fig. 8B is a schematic illustration of simulated uplink application packet latency CDF as a function of a number of cameras in the system, in accordance with some demonstrative aspects.
Fig. 9 is a schematic illustration of goal-oriented communications via lower-layer control signaling, in accordance with some demonstrative aspects.
Fig. 10 is a schematic flow-chart illustration of a method of signaling Segment-Association-Information (SAI) queue-size information for communication of application layer packets, in accordance with some demonstrative aspects.
Fig. 11 is a schematic flow-chart illustration of a method of signaling SAI queue-size information for communication of application layer packets, in accordance with some demonstrative aspects.
Fig. 12 is a schematic illustration of a product of manufacture, in accordance with some demonstrative aspects.

### DETAILED DESCRIPTION

In the following detailed description, numerous specific details are set forth in order to provide a thorough understanding of some aspects. However, it will be understood by persons of ordinary skill in the art that some aspects may be practiced without these specific details. In other instances, well-known methods, procedures, components, units and/or circuits have not been described in detail so as not to obscure the discussion.

Discussions herein utilizing terms such as, for example, "processing", "computing", "calculating", "determining", "establishing", "analyzing", "checking", or the like, may refer to operation(s) and/or process(es) of a computer, a computing platform, a computing system, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes.

The terms "plurality" and "a plurality", as used herein, include, for example, "multiple" or "two or more". For example, "a plurality of items" includes two or more items.

The words "exemplary" and "demonstrative" are used herein to mean "serving as an example, instance, demonstration, or illustration". Any aspect, or design described herein as "exemplary" or "demonstrative" is not necessarily to be construed as preferred or advantageous over other aspects, or designs.

References to "one aspect", "an aspect", "demonstrative aspect", "various aspects" etc., indicate that the aspect(s) so described may include a particular feature, structure, or characteristic, but not every aspect necessarily includes the particular feature, structure, or characteristic. Further, repeated use of the phrase "in one aspect" does not necessarily refer to the same aspect, although it may.

As used herein, unless otherwise specified the use of the ordinal adjectives "first", "second", "third" etc., to describe a common object, merely indicate that different instances of like objects are being referred to, and are not intended to imply that the objects so described must be in a given sequence, either temporally, spatially, in ranking, or in any other manner.

The phrases "at least one" and "one or more" may be understood to include a numerical quantity greater than or equal to one, e.g., one, two, three, four, [...], etc. The phrase "at least one of" with regard to a group of elements may be used herein to mean at least one element from the group consisting of the elements. For example, the phrase "at least one of" with regard to a group of elements may be used herein to mean one of the listed elements, a plurality of one of the listed elements, a plurality of individual listed elements, or a plurality of a multiple of individual listed elements.

Some aspects may be used in conjunction with various devices and systems, for example, a User Equipment (UE), a Mobile Device (MD), a wireless station (STA), a Personal Computer (PC), a desktop computer, a mobile computer, a laptop computer, a notebook computer, a tablet computer, a server computer, a handheld computer, a handheld device, a wearable device, a sensor device, an Internet of Things (IoT) device, a Personal Digital Assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless Access Point (AP), a wired or wireless router, a wired or wireless modem, a video device, an audio device, an audio-video (A/V) device, a wired or wireless network, a wireless area network, a Wireless Video Area Network (WVAN), a Local Area Network (LAN), a Wireless LAN (WLAN), a Personal Area Network (PAN), a Wireless PAN (WPAN), and the like.

Some aspects may be used in conjunction with devices and/or networks operating in accordance with existing IEEE 802.11 standards (including IEEE 802.11-2020 (IEEE 802.11-2020, IEEE Standard for Information Technology-Telecommunications and Information Exchange between Systems Local and Metropolitan Area Networks-Specific Requirements; Part 11: Wireless LAN Medium Access Control (MAC) and Physical Layer (PHY) Specifications, December, 2020*);* IEEE 802.11be (IEEE P802.11be/D5.0 Draft Standard for Information technology-Telecommunications and information exchange between systems Local and metropolitan area networks- Specific requirements; Part 11: Wireless LAN Medium Access Control (MAC) and Physical Layer (PHY) Specifications; Amendment 8: Enhancements for extremely high throughput (EHT), November 2023*);* IEEE 802.11ax (IEEE 802.11ax-2021, IEEE Standard for Information Technology-Telecommunications and Information Exchange between Systems Local and Metropolitan Area Networks-Specific Requirements; Part 11: Wireless LAN Medium Access Control (MAC) and Physical Layer (PHY) Specifications; Amendment 1: Enhancements for High-Efficiency WLAN, February 2021); and/or IEEE802.11bn (IEEE 802.11bn, IEEE Standard for Information Technology-Telecommunications and Information Exchange between Systems Local and Metropolitan Area Networks-Specific Requirements; Part 11: Wireless LAN Medium Access Control (MAC) and Physical Layer (PHY) Specifications - Amendment: Enhancements for Ultra High Reliability (UHR))) and/or future versions and/or derivatives thereof, devices and/or networks operating in accordance with existing cellular specifications and/or protocols, and/or future versions and/or derivatives thereof, units and/or devices which are part of the above networks, and the like.

Some aspects may be used in conjunction with one way and/or two-way radio communication systems, cellular radio-telephone communication systems, a mobile phone, a cellular telephone, a wireless telephone, a Personal Communication Systems (PCS) device, a PDA device which incorporates a wireless communication device, a mobile or portable Global Positioning System (GPS) device, a device which incorporates a GPS receiver or transceiver or chip, a device which incorporates an RFID element or chip, a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, Digital Video Broadcast (DVB) devices or systems, multistandard radio devices or systems, a wired or wireless handheld device, e.g., a Smartphone, a Wireless Application Protocol (WAP) device, or the like.

Some aspects may be used in conjunction with one or more types of wireless communication signals and/or systems, for example, Radio Frequency (RF), Infra-Red (IR), Frequency-Division Multiplexing (FDM), Orthogonal FDM (OFDM), Orthogonal Frequency-Division Multiple Access (OFDMA), FDM Time-Division Multiplexing (TDM), Time-Division Multiple Access (TDMA), Multi-User MIMO (MU-MIMO), Spatial Division Multiple Access (SDMA), Extended TDMA (E-TDMA), General Packet Radio Service (GPRS), extended GPRS, Code-Division Multiple Access (CDMA), Wideband CDMA (WCDMA), CDMA 2000, single-carrier CDMA, multi-carrier CDMA, Multi-Carrier Modulation (MDM), Discrete Multi-Tone (DMT), Bluetooth^{®}, Global Positioning System (GPS), Wi-Fi, Wi-Max, ZigBee^{™}, Ultra-Wideband (UWB), 4G, Fifth Generation (5G), or Sixth Generation (6G) mobile networks, 3GPP, Long Term Evolution (LTE), LTE advanced, Enhanced Data rates for GSM Evolution (EDGE), or the like. Other aspects may be used in various other devices, systems and/or networks.

The term "wireless device", as used herein, includes, for example, a device capable of wireless communication, a communication device capable of wireless communication, a communication station capable of wireless communication, a portable or non-portable device capable of wireless communication, or the like. In some demonstrative aspects, a wireless device may be or may include a peripheral that may be integrated with a computer, or a peripheral that may be attached to a computer. In some demonstrative aspects, the term "wireless device" may optionally include a wireless service.

The term "communicating" as used herein with respect to a communication signal includes transmitting the communication signal and/or receiving the communication signal. For example, a communication unit, which is capable of communicating a communication signal, may include a transmitter to transmit the communication signal to at least one other communication unit, and/or a communication receiver to receive the communication signal from at least one other communication unit. The verb communicating may be used to refer to the action of transmitting or the action of receiving. In one example, the phrase "communicating a signal" may refer to the action of transmitting the signal by a first device, and may not necessarily include the action of receiving the signal by a second device. In another example, the phrase "communicating a signal" may refer to the action of receiving the signal by a first device, and may not necessarily include the action of transmitting the signal by a second device. The communication signal may be transmitted and/or received, for example, in the form of Radio Frequency (RF) communication signals, and/or any other type of signal.

As used herein, the term "circuitry" may refer to, be part of, or include, an Application Specific Integrated Circuit (ASIC), an integrated circuit, an electronic circuit, a processor (shared, dedicated or group), and/or memory (shared, dedicated, or group), that execute one or more software or firmware programs, a combinational logic circuit, and/or other suitable hardware components that provide the described functionality. In some aspects, some functions associated with the circuitry may be implemented by, one or more software or firmware modules. In some aspects, circuitry may include logic, at least partially operable in hardware.

The term "logic" may refer, for example, to computing logic embedded in circuitry of a computing apparatus and/or computing logic stored in a memory of a computing apparatus. For example, the logic may be accessible by a processor of the computing apparatus to execute the computing logic to perform computing functions and/or operations. In one example, logic may be embedded in various types of memory and/or firmware, e.g., silicon blocks of various chips and/or processors. Logic may be included in, and/or implemented as part of, various circuitry, e.g. radio circuitry, receiver circuitry, control circuitry, transmitter circuitry, transceiver circuitry, processor circuitry, and/or the like. In one example, logic may be embedded in volatile memory and/or non-volatile memory, including random access memory, read only memory, programmable memory, magnetic memory, flash memory, persistent memory, and the like. Logic may be executed by one or more processors using memory, e.g., registers, stuck, buffers, and/or the like, coupled to the one or more processors, e.g., as necessary to execute the logic.

Some demonstrative aspects may be used in conjunction with a WLAN, e.g., a Wi-Fi network. Other aspects may be used in conjunction with any other suitable wireless communication network, for example, a wireless area network, a "piconet", a WPAN, a WVAN and the like.

Some demonstrative aspects may be used in conjunction with a wireless communication network communicating over a sub-10 Gigahertz (GHz) frequency band, for example, a 2.4GHz frequency band, a 5GHz frequency band, a 6GHz frequency band, and/or any other frequency band below 10GHz.

Some demonstrative aspects may be used in conjunction with a wireless communication network communicating over an Extremely High Frequency (EHF) band (also referred to as the "millimeter wave (mmWave)" frequency band), for example, a frequency band within the frequency band of between 20GHz and 300GHz, for example, a frequency band above 45GHz, e.g., a 60GHz frequency band, and/or any other mmWave frequency band. Some demonstrative aspects may be used in conjunction with a wireless communication network communicating over the sub-10 GHz frequency band and/or the mmWave frequency band, e.g., as described below. However, other aspects may be implemented utilizing any other suitable wireless communication frequency bands, for example, a 5G frequency band, a frequency band below 20GHz, a Sub 1 GHz (S1G) band, a WLAN frequency band, a WPAN frequency band, and the like.

Some demonstrative aspects may be implemented by an mmWave STA (mSTA), which may include for example, a STA having a radio transmitter, which is capable of operating on a channel that is within the mmWave frequency band. In one example, mmWave communications may involve one or more directional links to communicate at a rate of multiple gigabits per second, for example, at least 1 Gigabit per second, e.g., at least 7 Gigabit per second, at least 30 Gigabit per second, or any other rate.

In some demonstrative aspects, the mmWave STA may include a Directional Multi-Gigabit (DMG) STA, which may be configured to communicate over a DMG frequency band. For example, the DMG band may include a frequency band wherein the channel starting frequency is above 45 GHz.

In some demonstrative aspects, the mmWave STA may include an Enhanced DMG (EDMG) STA, which may be configured to implement one or more mechanisms, which may be configured to enable Single User (SU) and/or Multi-User (MU) communication of Downlink (DL) and/or Uplink frames (UL) using a MIMO scheme. For example, the EDMG STA may be configured to implement one or more channel bonding mechanisms, which may, for example, support communication over a channel bandwidth (BW) (also referred to as a "wide channel", an "EDMG channel", or a "bonded channel") including two or more channels, e.g., two or more 2.16 GHz channels. For example, the channel bonding mechanisms may include, for example, a mechanism and/or an operation whereby two or more channels, e.g., 2.16 GHz channels, can be combined, e.g., for a higher bandwidth of packet transmission, for example, to enable achieving higher data rates, e.g., when compared to transmissions over a single channel. Some demonstrative aspects are described herein with respect to communication over a channel BW including two or more 2.16 GHz channels, however other aspects may be implemented with respect to communications over a channel bandwidth, e.g., a "wide" channel, including or formed by any other number of two or more channels, for example, an aggregated channel including an aggregation of two or more channels. For example, the EDMG STA may be configured to implement one or more channel bonding mechanisms, which may, for example, support an increased channel bandwidth, for example, a channel BW of 4.32 GHz, a channel BW of 6.48 GHz, a channel BW of 8.64 GHz, and/or any other additional or alternative channel BW. The EDMG STA may perform other additional or alternative functionality.

In other aspects, the mmWave STA may include any other type of STA and/or may perform other additional or alternative functionality. Other aspects may be implemented by any other apparatus, device and/or station.

The term "antenna", as used herein, may include any suitable configuration, structure and/or arrangement of one or more antenna elements, components, units, assemblies and/or arrays. In some aspects, the antenna may implement transmit and receive functionalities using separate transmit and receive antenna elements. In some aspects, the antenna may implement transmit and receive functionalities using common and/or integrated transmit/receive elements. The antenna may include, for example, a phased array antenna, a single element antenna, a set of switched beam antennas, and/or the like.

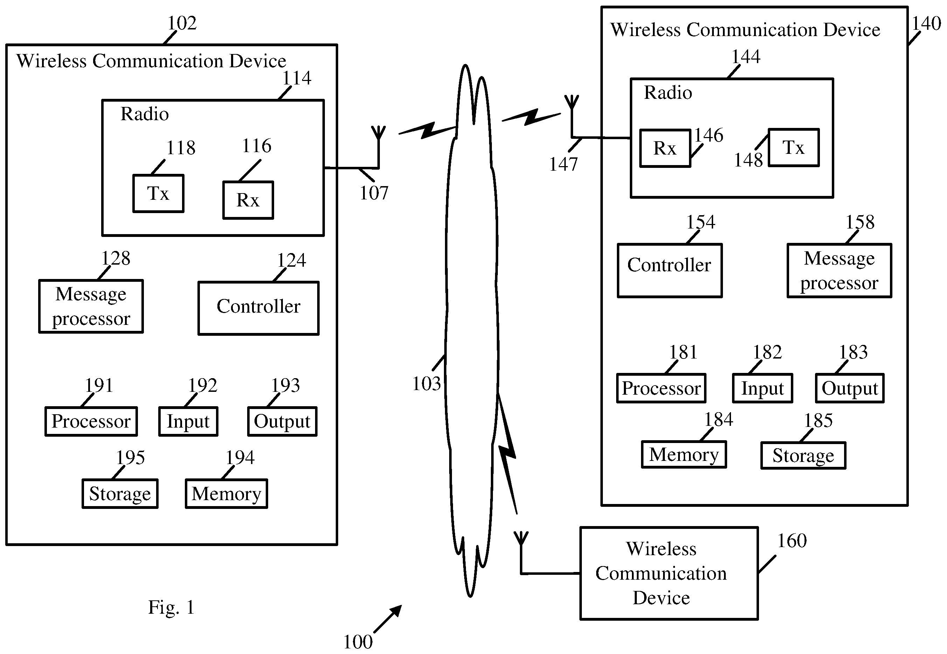

Reference is made to Fig. 1, which schematically illustrates a system 100, in accordance with some demonstrative aspects.

As shown in Fig. 1, in some demonstrative aspects, system 100 may include one or more wireless communication devices. For example, system 100 may include a wireless communication device 102, a wireless communication device 140, a wireless communication device 160, and/or one more other devices.

In some demonstrative aspects, devices 102, 140, and/or 160 may include a mobile device or a non-mobile, e.g., a static, device.

For example, devices 102, 140, and/or 160 may include, for example, a UE, an MD, a STA, an AP, a PC, a desktop computer, a mobile computer, a laptop computer, an Ultrabook^{™} computer, a notebook computer, a tablet computer, a server computer, a handheld computer, an Internet of Things (IoT) device, a sensor device, a handheld device, a wearable device, a PDA device, a handheld PDA device, an on-board device, an off-board device, a hybrid device (e.g., combining cellular phone functionalities with PDA device functionalities), a consumer device, a vehicular device, a non-vehicular device, a mobile or portable device, a non-mobile or non-portable device, a mobile phone, a cellular telephone, a PCS device, a PDA device which incorporates a wireless communication device, a mobile or portable GPS device, a DVB device, a relatively small computing device, a non-desktop computer, a "Carry Small Live Large" (CSLL) device, an Ultra Mobile Device (UMD), an Ultra Mobile PC (UMPC), a Mobile Internet Device (MID), an "Origami" device or computing device, a device that supports Dynamically Composable Computing (DCC), a context-aware device, a video device, an audio device, an A/V device, a Set-Top-Box (STB), a Blu-ray disc (BD) player, a BD recorder, a Digital Video Disc (DVD) player, a High Definition (HD) DVD player, a DVD recorder, a HD DVD recorder, a Personal Video Recorder (PVR), a broadcast HD receiver, a video source, an audio source, a video sink, an audio sink, a stereo tuner, a broadcast radio receiver, a flat panel display, a Personal Media Player (PMP), a digital video camera (DVC), a digital audio player, a speaker, an audio receiver, an audio amplifier, a gaming device, a data source, a data sink, a Digital Still camera (DSC), a media player, a Smartphone, a television, a music player or the like.

In some demonstrative aspects, device 102 may include, for example, one or more of a processor 191, an input unit 192, an output unit 193, a memory unit 194, and/or a storage unit 195; and/or device 140 may include, for example, one or more of a processor 181, an input unit 182, an output unit 183, a memory unit 184, and/or a storage unit 185. Devices 102 and/or 140 may optionally include other suitable hardware components and/or software components. In some demonstrative aspects, some or all of the components of one or more of devices 102 and/or 140 may be enclosed in a common housing or packaging, and may be interconnected or operably associated using one or more wired or wireless links. In other aspects, components of one or more of devices 102 and/or 140 may be distributed among multiple or separate devices.

In some demonstrative aspects, processor 191 and/or processor 181 may include, for example, a Central Processing Unit (CPU), a Digital Signal Processor (DSP), one or more processor cores, a single-core processor, a dual-core processor, a multiple-core processor, a microprocessor, a host processor, a controller, a plurality of processors or controllers, a chip, a microchip, one or more circuits, circuitry, a logic unit, an Integrated Circuit (IC), an Application-Specific IC (ASIC), or any other suitable multi-purpose or specific processor or controller. Processor 191 may execute instructions, for example, of an Operating System (OS) of device 102 and/or of one or more suitable applications. Processor 181 may execute instructions, for example, of an Operating System (OS) of device 140 and/or of one or more suitable applications.

In some demonstrative aspects, input unit 192 and/or input unit 182 may include, for example, a keyboard, a keypad, a mouse, a touch-screen, a touch-pad, a track-ball, a stylus, a microphone, or other suitable pointing device or input device. Output unit 193 and/or output unit 183 may include, for example, a monitor, a screen, a touch-screen, a flat panel display, a Light Emitting Diode (LED) display unit, a Liquid Crystal Display (LCD) display unit, a plasma display unit, one or more audio speakers or earphones, or other suitable output devices.

In some demonstrative aspects, memory unit 194 and/or memory unit 184 includes, for example, a Random Access Memory (RAM), a Read Only Memory (ROM), a Dynamic RAM (DRAM), a Synchronous DRAM (SD-RAM), a flash memory, a volatile memory, a non-volatile memory, a cache memory, a buffer, a short term memory unit, a long term memory unit, or other suitable memory units. Storage unit 195 and/or storage unit 185 may include, for example, a hard disk drive, a disk drive, a solid-state drive (SSD), and/or other suitable removable or non-removable storage units. Memory unit 194 and/or storage unit 195, for example, may store data processed by device 102. Memory unit 184 and/or storage unit 185, for example, may store data processed by device 140.

In some demonstrative aspects, wireless communication devices 102, 140, and/or 160 may be capable of communicating content, data, information and/or signals via a wireless medium (WM) 103. In some demonstrative aspects, wireless medium 103 may include, for example, a radio channel, an RF channel, a Wi-Fi channel, a cellular channel, a 5G channel, an IR channel, a Bluetooth (BT) channel, a Global Navigation Satellite System (GNSS) Channel, and the like.

In some demonstrative aspects, WM 103 may include one or more wireless communication frequency bands and/or channels. For example, WM 103 may include one or more channels in a sub-10GHz wireless communication frequency band, for example, a 2.4GHz wireless communication frequency band, one or more channels in a 5GHz wireless communication frequency band, and/or one or more channels in a 6GHz wireless communication frequency band. In another example, WM 103 may additionally or alternatively include one or more channels in an mmWave wireless communication frequency band. In other aspects, WM 103 may include any other type of channel over any other frequency band.

In some demonstrative aspects, device 102, device 140, and/or device 160 may include one or more radios including circuitry and/or logic to perform wireless communication between devices 102, 140, 160, and/or one or more other wireless communication devices. For example, device 102 may include one or more radios 114, and/or device 140 may include one or more radios 144.

In some demonstrative aspects, radios 114 and/or radios 144 may include one or more wireless receivers (Rx) including circuitry and/or logic to receive wireless communication signals, RF signals, frames, blocks, transmission streams, packets, messages, data items, and/or data. For example, a radio 114 may include at least one receiver 116, and/or a radio 144 may include at least one receiver 146.

In some demonstrative aspects, radios 114 and/or 144 may include one or more wireless transmitters (Tx) including circuitry and/or logic to transmit wireless communication signals, RF signals, frames, blocks, transmission streams, packets, messages, data items, and/or data. For example, a radio 114 may include at least one transmitter 118, and/or a radio 144 may include at least one transmitter 148.

In some demonstrative aspects, radios 114 and/or 144, transmitters 118 and/or 148, and/or receivers 116 and/or 146 may include circuitry; logic; Radio Frequency (RF) elements, circuitry and/or logic; baseband elements, circuitry and/or logic; modulation elements, circuitry and/or logic; demodulation elements, circuitry and/or logic; amplifiers; analog to digital and/or digital to analog converters; filters; and/or the like. For example, radios 114 and/or 144 may include or may be implemented as part of a wireless Network Interface Card (NIC), and the like.

In some demonstrative aspects, radios 114 and/or 144 may be configured to communicate over a 2.4GHz band, a 5GHz band, a 6GHz band, and/or any other band, for example, a directional band, e.g., an mmWave band, a 5G band, an S1G band, and/or any other band.

In some demonstrative aspects, radios 114 and/or 144 may include, or may be associated with one or more antennas.

In some demonstrative aspects, device 102 may include one or more antennas 107, and/or device 140 may include one or more antennas 147.

Antennas 107 and/or 147 may include any type of antennas suitable for transmitting and/or receiving wireless communication signals, blocks, frames, transmission streams, packets, messages and/or data. For example, antennas 107 and/or 147 may include any suitable configuration, structure and/or arrangement of one or more antenna elements, components, units, assemblies and/or arrays. In some aspects, antennas 107 and/or 147 may implement transmit and receive functionalities using separate transmit and receive antenna elements. In some aspects, antennas 107 and/or 147 may implement transmit and receive functionalities using common and/or integrated transmit/receive elements.

In some demonstrative aspects, device 102 may include a controller 124, and/or device 140 may include a controller 154. Controller 124 may be configured to perform and/or to trigger, cause, instruct and/or control device 102 to perform, one or more communications, to generate and/or communicate one or more messages and/or transmissions, and/or to perform one or more functionalities, operations and/or procedures between devices 102, 140, 160 and/or one or more other devices; and/or controller 154 may be configured to perform, and/or to trigger, cause, instruct and/or control device 140 to perform, one or more communications, to generate and/or communicate one or more messages and/or transmissions, and/or to perform one or more functionalities, operations and/or procedures between devices 102, 140, 160 and/or one or more other devices, e.g., as described below.

In some demonstrative aspects, controllers 124 and/or 154 may include, or may be implemented, partially or entirely, by circuitry and/or logic, e.g., one or more processors including circuitry and/or logic, memory circuitry and/or logic, Media-Access Control (MAC) circuitry and/or logic, Physical Layer (PHY) circuitry and/or logic, baseband (BB) circuitry and/or logic, a BB processor, a BB memory, Application Processor (AP) circuitry and/or logic, an AP processor, an AP memory, and/or any other circuitry and/or logic, configured to perform the functionality of controllers 124 and/or 154, respectively. Additionally or alternatively, one or more functionalities of controllers 124 and/or 154 may be implemented by logic, which may be executed by a machine and/or one or more processors, e.g., as described below.

In one example, controller 124 may include circuitry and/or logic, for example, one or more processors including circuitry and/or logic, to cause, trigger and/or control a wireless device, e.g., device 102, and/or a wireless station, e.g., a wireless STA implemented by device 102, to perform one or more operations, communications and/or functionalities, e.g., as described herein. In one example, controller 124 may include at least one memory, e.g., coupled to the one or more processors, which may be configured, for example, to store, e.g., at least temporarily, at least some of the information processed by the one or more processors and/or circuitry, and/or which may be configured to store logic to be utilized by the processors and/or circuitry.

In one example, controller 154 may include circuitry and/or logic, for example, one or more processors including circuitry and/or logic, to cause, trigger and/or control a wireless device, e.g., device 140, and/or a wireless station, e.g., a wireless STA implemented by device 140, to perform one or more operations, communications and/or functionalities, e.g., as described herein. In one example, controller 154 may include at least one memory, e.g., coupled to the one or more processors, which may be configured, for example, to store, e.g., at least temporarily, at least some of the information processed by the one or more processors and/or circuitry, and/or which may be configured to store logic to be utilized by the processors and/or circuitry.

In some demonstrative aspects, at least part of the functionality of controller 124 may be implemented as part of one or more elements of radio 114, and/or at least part of the functionality of controller 154 may be implemented as part of one or more elements of radio 144.

In other aspects, the functionality of controller 124 may be implemented as part of any other element of device 102, and/or the functionality of controller 154 may be implemented as part of any other element of device 140.

In some demonstrative aspects, device 102 may include a message processor 128 configured to generate, process and/or access one or messages communicated by device 102.

In one example, message processor 128 may be configured to generate one or more messages to be transmitted by device 102, and/or message processor 128 may be configured to access and/or to process one or more messages received by device 102, e.g., as described below.

In one example, message processor 128 may include at least one first component configured to generate a message, for example, in the form of a frame, field, information element and/or protocol data unit, for example, a MAC Protocol Data Unit (MPDU); at least one second component configured to convert the message into a PHY Protocol Data Unit (PPDU), for example, by processing the message generated by the at least one first component, e.g., by encoding the message, modulating the message and/or performing any other additional or alternative processing of the message; and/or at least one third component configured to cause transmission of the message over a wireless communication medium, e.g., over a wireless communication channel in a wireless communication frequency band, for example, by applying to one or more fields of the PPDU one or more transmit waveforms. In other aspects, message processor 128 may be configured to perform any other additional or alternative functionality and/or may include any other additional or alternative components to generate and/or process a message to be transmitted.

In some demonstrative aspects, device 140 may include a message processor 158 configured to generate, process and/or access one or more messages communicated by device 140.

In one example, message processor 158 may be configured to generate one or more messages to be transmitted by device 140, and/or message processor 158 may be configured to access and/or to process one or more messages received by device 140, e.g., as described below.

In one example, message processor 158 may include at least one first component configured to generate a message, for example, in the form of a frame, field, information element and/or protocol data unit, for example, an MPDU; at least one second component configured to convert the message into a PPDU, for example, by processing the message generated by the at least one first component, e.g., by encoding the message, modulating the message and/or performing any other additional or alternative processing of the message; and/or at least one third component configured to cause transmission of the message over a wireless communication medium, e.g., over a wireless communication channel in a wireless communication frequency band, for example, by applying to one or more fields of the PPDU one or more transmit waveforms. In other aspects, message processor 158 may be configured to perform any other additional or alternative functionality and/or may include any other additional or alternative components to generate and/or process a message to be transmitted.

In some demonstrative aspects, message processors 128 and/or 158 may include, or may be implemented, partially or entirely, by circuitry and/or logic, e.g., one or more processors including circuitry and/or logic, memory circuitry and/or logic, MAC circuitry and/or logic, PHY circuitry and/or logic, BB circuitry and/or logic, a BB processor, a BB memory, AP circuitry and/or logic, an AP processor, an AP memory, and/or any other circuitry and/or logic, configured to perform the functionality of message processors 128 and/or 158, respectively. Additionally or alternatively, one or more functionalities of message processors 128 and/or 158 may be implemented by logic, which may be executed by a machine and/or one or more processors, e.g., as described below.

In some demonstrative aspects, at least part of the functionality of message processor 128 may be implemented as part of radio 114, and/or at least part of the functionality of message processor 158 may be implemented as part of radio 144.

In some demonstrative aspects, at least part of the functionality of message processor 128 may be implemented as part of controller 124, and/or at least part of the functionality of message processor 158 may be implemented as part of controller 154.

In other aspects, the functionality of message processor 128 may be implemented as part of any other element of device 102, and/or the functionality of message processor 158 may be implemented as part of any other element of device 140.

In some demonstrative aspects, at least part of the functionality of controller 124 and/or message processor 128 may be implemented by an integrated circuit, for example, a chip, e.g., a System on Chip (SoC). In one example, the chip or SoC may be configured to perform one or more functionalities of one or more radios 114. For example, the chip or SoC may include one or more elements of controller 124, one or more elements of message processor 128, and/or one or more elements of one or more radios 114. In one example, controller 124, message processor 128, and one or more radios 114 may be implemented as part of the chip or SoC.

In other aspects, controller 124, message processor 128 and/or one or more radios 114 may be implemented by one or more additional or alternative elements of device 102.

In some demonstrative aspects, at least part of the functionality of controller 154 and/or message processor 158 may be implemented by an integrated circuit, for example, a chip, e.g., a SoC. In one example, the chip or SoC may be configured to perform one or more functionalities of one or more radios 144. For example, the chip or SoC may include one or more elements of controller 154, one or more elements of message processor 158, and/or one or more elements of one or more radios 144. In one example, controller 154, message processor 158, and one or more radios 144 may be implemented as part of the chip or SoC.

In other aspects, controller 154, message processor 158 and/or one or more radios 144 may be implemented by one or more additional or alternative elements of device 140.

In some demonstrative aspects, device 102, device 140, and/or device 160 may include, operate as, perform the role of, and/or perform one or more functionalities of, one or more STAs. For example, device 102 may include at least one STA, device 140 may include at least one STA, and/or device 160 may include at least one STA.

In some demonstrative aspects, device 102, device 140, and/or device 160 may include, operate as, perform the role of, and/or perform one or more functionalities of, one or more Extremely High Throughput (EHT) STAs. For example, device 102 may include, operate as, perform the role of, and/or perform one or more functionalities of, one or more EHT STAs, and/or device 140 may include, operate as, perform the role of, and/or perform one or more functionalities of, one or more EHT STAs.

In some demonstrative aspects, for example, device 102, device 140, and/or device 160 may be configured to perform one or more operations, and/or functionalities of a Wi-Fi 8 STA.

In other aspects, for example, devices 102, 140 and/or 160 may be configured to perform one or more operations, and/or functionalities of an Ultra High Reliability (UHR) STA.

In other aspects, for example, devices 102, 140, and/or 160 may be configured to perform one or more operations, and/or functionalities of any other additional or alternative type of STA.

In other aspects, device 102, device 140, and/or device 160 may include, operate as, perform the role of, and/or perform one or more functionalities of, any other wireless device and/or station, e.g., a WLAN STA, a Wi-Fi STA, and the like.

In some demonstrative aspects, device 102, device 140, and/or device 160 may be configured operate as, perform the role of, and/or perform one or more functionalities of, an Access Point (AP), e.g., a High Throughput (HT) AP STA, a High Efficiency (HE) AP STA, an EHT AP STA and/or a UHR AP STA.

In some demonstrative aspects, device 102, device 140, and/or device 160 may be configured to operate as, perform the role of, and/or perform one or more functionalities of, a non-AP STA, e.g., an HT non-AP STA, an HE non-AP STA, an EHT non-AP STA and/or a UHR non-AP STA.

In other aspects, device 102, device 140, and/or device 160 may operate as, perform the role of, and/or perform one or more functionalities of, any other additional or alternative device and/or station.

In one example, a station (STA) may include a logical entity that is a singly addressable instance of a medium access control (MAC) and physical layer (PHY) interface to the wireless medium (WM). The STA may perform any other additional or alternative functionality.

In one example, an AP may include an entity that contains one station (STA) and provides access to the distribution services, via the wireless medium (WM) for associated STAs. An AP may include a STA and a distribution system access function (DSAF). The AP may perform any other additional or alternative functionality.

In some demonstrative aspects devices 102, 140, and/or 160 may be configured to communicate in an HT network, an HE network, an EHT network, a UHR network, and/or any other network.

In some demonstrative aspects, devices 102, 140 and/or 160 may be configured to operate in accordance with one or more Specifications, for example, including one or more *IEEE 802.11 Specifications,* e.g., an *IEEE 802.11-2020 Specification, an IEEE 802.11be Specification,* and/or any other specification and/or protocol.

In some demonstrative aspects, device 102 may include, operate as, perform a role of, and/or perform the functionality of, an AP STA.

In some demonstrative aspects, device 140, and/or device 160 may include, operate as, perform a role of, and/or perform the functionality of, one or more non-AP STAs. For example, device 140 may include, operate as, perform a role of, and/or perform the functionality of, at least one non-AP STA, and/or device 160 may include, operate as, perform a role of, and/or perform the functionality of, at least one non-AP STA.

In some demonstrative aspects, device 102, device 140, and/or device 160 may include, operate as, perform a role of, and/or perform the functionality of, a Multi-Link Device (MLD). For example, device 102 may include, operate as, perform a role of, and/or perform the functionality of, at least one MLD, device 140 may include, operate as, perform a role of, and/or perform the functionality of, at least one MLD, and/or device 160 may include, operate as, perform a role of, and/or perform the functionality of, at least one MLD, e.g., as described below.

For example, an MLD may include a device that is a logical entity that is capable of supporting more than one affiliated station (STA) and can operate using one or more affiliated STAs. For example, the MLD may present one Medium Access Control (MAC) data service and a single MAC Service Access Point (SAP) to the Logical Link Control (LLC) sublayer. The MLD may perform any other additional or alternative functionality.

In some demonstrative aspects, for example, an infrastructure framework may include a multi-link AP logical entity, which includes APs, e.g., on one side, and a multi-link non-AP logical entity, which includes non-APs, e.g., on the other side.

In some demonstrative aspects, device 102, device 140, and/or device 160 may be configured to operate as, perform the role of, and/or perform one or more functionalities of, an AP MLD.

In some demonstrative aspects, device 102, device 140, and/or device 160 may be configured to operate as, perform the role of, and/or perform one or more functionalities of, a non-AP MLD.

In other aspects, device 102, device 140, and/or device 160 may operate as, perform the role of, and/or perform one or more functionalities of, any other additional or alternative device and/or station.

For example, an AP MLD may include an MLD, where each STA affiliated with the MLD is an AP. In one example, the AP MLD may include a multi-link logical entity, where each STA within the multi-link logical entity is an EHT AP. The AP MLD may perform any other additional or alternative functionality.

For example, a non-AP MLD may include an MLD, where each STA affiliated with the MLD is a non-AP STA. In one example, the non-AP MLD may include a multi-link logical entity, where each STA within the multi-link logical entity is a non-AP EHT STA. The non-AP MLD may perform any other additional or alternative functionality.

In some demonstrative aspects, device 102, device 140, and/or device 160 may be configured to implement one or more operations and/or functionalities of an uplink control mechanism, which may be configured to control uplink communications from one or more non-AP STAs to an AP, e.g., as described below.

In some demonstrative aspects, device 102, device 140, and/or device 160 may be configured to implement one or more operations and/or functionalities of an uplink control mechanism, which may be configured to support uplink communications of one or more application layer packets in a WLAN, e.g., from one or more non-AP STAs to an AP, e.g., as described below.

In some demonstrative aspects, the uplink control mechanism may be configured to support goal-oriented uplink communications in a WLAN, e.g., from one or more non-AP STAs to an AP, e.g., as described below.

For example, goal-oriented communications may be utilized to significantly reduce a required data rate to successfully achieve a goal/task. According to this example, a greater number of wireless devices could be supported within the available wireless spectrum resources.

However, today's Wi-Fi standards do not natively support protocols and/or methods needed to realize goal-oriented communications. For example, one or more Wi-Fi protocols and/or methods may need to be implemented in an application layer, e.g., via micro-services, which may be inefficient due to the scheduling delays and/or overheads introduced in lower layers, e.g., layers that are below the application layer.

For example, it may be impractical to obtain the benefits of goal-oriented uplink communications implemented at application layer, for example, in some implementations, scenarios, use cases, and/or deployments, e.g., factory automation use cases, which involve a large density of sensors with large packet sizes and high data rate requirements, for example, cameras, Light detection and Ranging (LIDARs), and/or any other high data rate devices.

For example, an AP may be unable to assign uplink resource units to be used for one or more segments, e.g., a group of segments, belonging to a particular application layer packet, for example, when implementing a typical Wi-Fi uplink resource allocation mechanism utilizing a triggered based scheduling access.

For example, IEEE 802.11 non-AP STAs may not be able to identify one or more, e.g., multiple, segments that belong to a particular application layer packet. According to this example, there may be no procedure for an IEEE 802.11 STA to unambiguously determine which data frames and/or flow an AP intended for an uplink RU allocation in a trigger frame. This situation may lead to inefficiencies and/or sub-optimal usage of uplink resources.

For example, one approach may include implementing goal-oriented communications at an application layer, for example, using micro-services.

For example, control signaling methods and/or protocols required for accomplishing goal-oriented communications may be operated at the application layer, which may experience jittery and/or longer scheduling delays at the lower layers.

For example, Wi-Fi layers may allow Quality of Service (QoS) for each traffic stream to be set to high requirements, e.g., low-latency and/or high reliability. However, in many use cases and/or scenarios it may not be possible to achieve the QoS requirements of all the traffic flows simultaneously, for example, due to large device density, e.g., in futuristic factory use-cases and/or large payload sizes of sensor devices.

For example, one or more, e.g., every, frame within a stream may have the same requirements and/or priorities, e.g., in accordance with *IEEE 802.11* QoS approaches. According to this example, these same frame requirements and/or priorities may lead to overprovisioning of network resources, for example, as in practice, a frame may have relative priorities depending on the task/goal of the application.

For example, in some use cases, e.g., industrial use cases, it may be beneficial to offload computationally expensive tasks from devices to application services, e.g., to Edge application services. For example, offloading computationally expensive tasks to the application services may provide some key advantages, e.g., including low-cost deployment and maintenance, improved device battery life, centralized control, global optimization, and/or any other additional or alternative performance improvements.

For example, Wireless Networked Control System (WNCS), which may be an important and ubiquitous application in industrial scenarios, may greatly benefit from offloading the heavy computation tasks, e.g., tasks related to environment perception, to the application services, e.g., to the Edge application services. For example, WNCS applications in industrial scenarios may include robotic manipulation, navigation of autonomous mobile robots, and/or any other additional or alternative heavy computation applications.

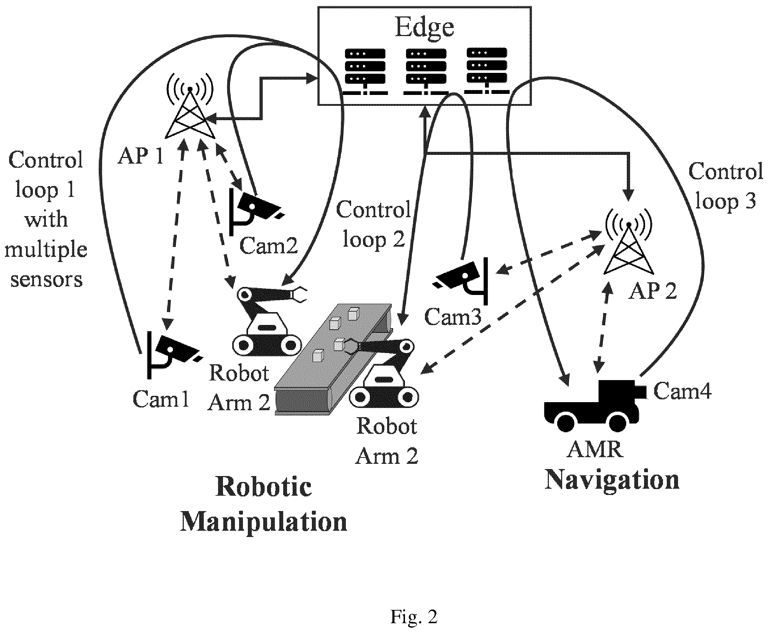

Reference is made to Fig. 2, which schematically illustrates uplink communications in wireless networks of an industrial use case, in accordance with some demonstrative aspects.

For example, as shown in Fig. 2, the wireless networks may be implemented to support one or more applications of robotic manipulation and/or autonomous mobile robot (AMR) navigation.

For example, as shown in Fig. 2, in a robotic manipulation example, a first control loop (*"control loop 1*") may have two Red Green Blue (RGB) Depth (RGBD) cameras, e.g., *"cam1"* and *"cam2",* which stream image and depth information via a first AP ("*AP1*") of a first network to an application service, e.g., to an Edge application, that performs vision analytics to determine object locations on a conveyor belt.

For example, as shown in Fig. 2, a second control loop (*"control loop 2"*) may have an RGBD camera, e.g., *"cam3",* which may stream image and depth information via a second AP (*"AP2"*) of a second network to the application service, e.g., to the Edge application.

For example, as shown in Fig. 2, a robot arm, e.g., *"robot arm 2",* may receive object location information from the Edge application.

For example, as shown in Fig. 2, the *robot arm* 2 may perform manipulation operations, for example, based on the object location information from the Edge application.

For example, as shown in Fig. 2, in a navigation example, a third control loop (*"control loop* 3") may be formed by an AMR camera, e.g., *"cam4",* the Edge application, which implements the perception and path-planning, and an AMR.

For example, offloading the control system tasks from the devices to the Edge application may be challenging. For example, these control applications may be delay sensitive and hence may require low-latency and/or high reliability communications, e.g., for effective control loop operations. Moreover, these control applications may involve a large number of sensors, e.g., such as cameras, LIDARs and/or any other sensing devices, which may be deployed in a small geographic area, and may generate large size packets, e.g., periodically. This situation may lead to a large amount of uplink traffic, and network congestion.

For example, a communication protocol layer stack may divide large-size packets, e.g., application packets (App-pkts), into smaller chunks (also referred to as "segments").

For example, it may be assumed that a segment size is equal to or smaller than a maximum transport unit (MTU) size supported by a Wi-Fi system. For example, the segmentation of the packets into the segments may be performed, for example, by an application layer and/or any other layers, e.g., which are above Wi-Fi layers.

For example, there may be a need to provide a technical solution to support low-latency and/or high-reliability treatment of real-time camera traffic and/or in the control loop, for example, in order to provide successful control loop operation, e.g., to support the robots and/or AMRs.

For example, an entire application packet (also referred to as "App-pkt"), e.g., a video frame, may be lost, for example, if some, e.g., all, segments of the application packet are not received within a specified timebound. For example, such a situation where the entire App-pkt is lost may lead to failure of a particular control loop associated with the application packet.

For example, in some cases, there may be no point of successfully transmitting only some of the segments of an App-pkt, but it may be important to satisfy QoS requirements, e.g., latency, reliability and/or any other QoS requirements, for the entire group of segments associated with the App-pkt, for example, for the industrial control loop purpose.

For example, in such use cases, transmission failure/delay of any segment of the App-pkt at the access layer may result in failure to satisfy application packet Key Performance Indicators (KPIs), and/or wastage of resources consumed by all other segments of the App-pkt.

For example, in some use cases, e.g., factory use cases, there may be a large number of devices, while the available spectrum resources and/or network capacity may be limited. In such use cases, it may not be feasible to support uplink traffic from all the sensors and devices.

For example, a simulation may be configured to illustrate technical aspects due to segmentation of large-size App-pkts and/or lack of segment-association information at Wi-Fi access layers. For example, the simulation may be configured for a scenario including a plurality of cameras generating uplink traffic, wherein each camera generates periodic traffic of App-pkts. For example, the simulation may be configured, e.g., according to the following settings:

**Table 1**

| Layer | Parameter | Value |
|---|---|---|
| Application layer | App-pkt size | 92.17 Kilobyte (Kbyte) |
| | Arrival type | Periodic |
| | Arrival rate | 25 App-pkts/s (~18.434 Megabits per second (Mbps)) |
| Wi-Fi MAC layer | Packet queuing time limit (Packets exceeding this time limit in L2 buffer are dropped) | 40 milliseconds (ms) |
| | Scheduling strategy | Proportional fair scheduling |
| Radio layer | Bandwidth | 100 Megahertz (MHz) |
| | Antenna configuration | 1x1 Single Input Single Output (SISO) |
| | Transmit power | 23 decibel milli-Wats (dBm) |

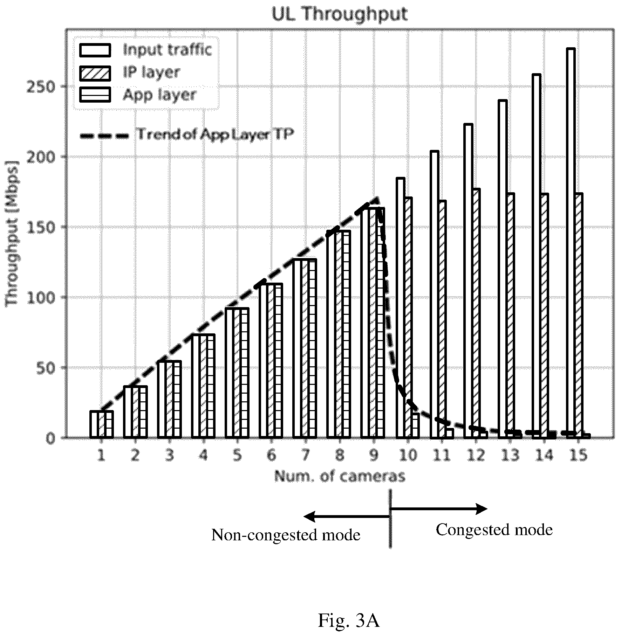

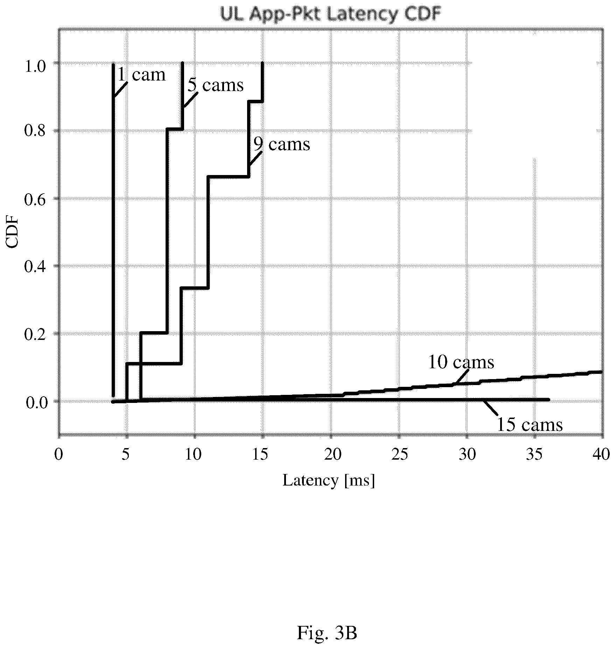

Reference is made to Fig. 3A, which schematically illustrates simulated throughput and latency as a function of a number of cameras in a system, and to Fig. 3B, which schematically illustrates a simulated uplink application packet latency Cumulative Distribution Function (CDF) as a function of the number of cameras in the system, to illustrate one or more technical aspects, which may be addressed in accordance with some demonstrative aspects.

For example, as shown in Figs. 3A and 3B, the system may be working in a non-congested mode, for example, when injected traffic is less than a system capacity.

For example, as shown in Fig. 3A, the system may be working in the non-congested mode, for example, as long as the injected traffic is received from less than 9 cameras.

For example, as shown in Fig. 3A, the throughput results show that up to 9 cameras, the application layer throughput is close to the Internet Protocol (IP) layer throughput, e.g., since the injected traffic is less than the system capacity (non-congested mode).

For example, as shown in Fig. 3A, the system may be working in a congested mode, for example, when the injected traffic is received from 10 cameras or more.

For example, as shown in Fig. 3A, the injected uplink traffic exceeds the system capacity (congested mode) and the application layer throughput reduces drastically, e.g., even though the IP layer throughput is close to its maximum, for example, when the system includes 10 or more cameras.

For example, this sharp drop in the application layer throughput at the congested mode may be the result of one or more segments belonging to an App-pkt not being sent successfully, for example, within a required latency bound, e.g., 40ms. For example, this failure in communicating some of the segments of the App-pkt may prevent a receiver side from successfully reconstructing the App-pkt.

For example, as shown in Fig. 3B, an efficient system performance may be maintained, for example, for up to 9 cameras in the system. However, as shown in Fig. 3B, the latency may significantly increase with 10 or more cameras in the system.

For example, as shown by the simulation results of Fig. 3A and Fig. 3B, in real-time applications and/or time-critical applications the system capacity may be rendered almost useless, e.g., for high traffic scenarios.

For example, this system inefficiency may occur, for example, in case an AP scheduler may not be able to efficiently allocate to a STA resources required to send all segments of an App-pkt within the latency bound, for example, in case the AP scheduler is not aware of an association between the segments and the App-Pkt.

Referring back to Fig. 1, in some demonstrative aspects, device 102, device 140, and/or device 160 may be configured to implement one or more operations and/or functionalities of an uplink control mechanism, which may be configured to support goal-oriented communications in a WLAN, e.g., as described below.

In some demonstrative aspects, device 102, device 140, and/or device 160 may be configured to implement one or more operations and/or functionalities of an uplink control mechanism, which may be configured to support goal-oriented communication in lower layers, e.g., layers below an application layer, of an access network stack, e.g., as described below.

In some demonstrative aspects, the uplink control mechanism may be configured to provide a technical solution to support a transport mode, which allows applications, e.g., Edge applications, to selectively retrieve, e.g., with low latency, uplink data from STAs' buffers, e.g., as described below.

In some demonstrative aspects, the uplink control mechanism may be configured to provide a technical solution to support control signaling, which may be required for goal-oriented communication, to be performed in lower layers of the network stack, e.g., layers below the application layer, for example, instead of performing the control signaling at an application layer, e.g., as described below.

In some demonstrative aspects, the uplink control mechanism may be configured to provide a technical solution to support one or more applications, e.g., Edge applications, which may use intelligence processing, e.g., AI models, to determine a dynamic importance of one or more, e.g., each, STA's uplink data for corresponding tasks, and to send these importance parameters to one or more respective APs, e.g., as described below.

In some demonstrative aspects, the uplink control mechanism may be configured to provide a technical solution to support the one or more APs, which may use the importance parameters, for example, to selectively retrieve uplink data, e.g., at least required uplink data or only required uplink data, from the one or more STAs.

In some demonstrative aspects, the uplink control mechanism may be configured to provide a technical solution to support the APs in the selective retrieval of uplink data, for example, to provide a technical solution to support a more efficient use of the network resources, for example, to efficiently support a larger number of sensors and/or other devices.

In some demonstrative aspects, device 102, device 140, and/or device 160 may be configured to implement one or more operations and/or functionalities of an uplink control mechanism, which may be configured to provide a technical solution to support efficient implementation of goal-oriented communications in the WLAN, e.g., as described below.

In some demonstrative aspects, the uplink control mechanism may be configured to provide a technical solution to support transmitting substantially only information that is strictly relevant to an effective fulfilment of a goal, for example, instead of transmitting all the information generated by all traffic streams, e.g., as described below.

In some demonstrative aspects, the uplink control mechanism may be configured to provide a technical solution to support one or more enhancements in one or more technology components, e.g., to be potentially implemented by Wi-Fi 8 communication protocols, for example, to implement the goal-oriented communications, e.g., as described below.

In some demonstrative aspects, device 102, device 140, and/or device 160 may be configured to implement one or more operations and/or functionalities of an enhanced Buffer Status Report (BSR) (eBSR) mechanism, which may be configured to support communicating an eBSR, e.g., as described below.

In some demonstrative aspects, the eBSR may be configured to include information about data in a data flow, e.g., in each traffic flow, for example, in addition to a buffer size, e.g., as described below.

In some demonstrative aspects, the eBSR mechanism may be configured to provide a technical solution to support communicating information (group segment information) corresponding to a group of segments, which may be passed, e.g., from a STA to an AP, for example, so that the AP may not only know an amount of data queued at the STA's buffers, but also information about an amount of data belonging to an application packet, e.g., as described below.

For example, the eBSR mechanism may be configured to provide a technical solution to support APs in using the group segment information in determining, e.g., intelligently, how to achieve goal-oriented communications, e.g., as described below.

In some demonstrative aspects, device 102, device 140, and/or device 160 may be configured to implement one or more operations and/or functionalities of an enhanced trigger access mechanism, which may be configured to support an AP in performing integrated handling of a group of segments, e.g., as described below.

For example, in some implementations, scenarios, use cases, and/or deployments, a STA may determine multiplexing, and/or prioritization of logical channels, for example, based on a set of static rules, which may result in less efficient uplink resource usage.

In some demonstrative aspects, the enhanced trigger access mechanism may be implemented, for example, to provide a technical solution to support the AP in dynamically influencing the logical channel multiplexing and/or prioritization procedures in the STA, for example, to maximize uplink resource usage efficiency, e.g., as described below.

In some demonstrative aspects, device 102, device 140, and/or device 160 may be configured to implement one or more operations and/or functionalities of a STA buffer management mechanism, which may be configured to support an AP in triggering and/or managing one or more buffer management operations at a queue of a STA, e.g., as described below.

In some demonstrative aspects, the STA buffer management mechanism may be implemented by the AP, for example, to trigger the dropping of unnecessary segments in a group of segments queued at the STA, e.g., as described below.

In some demonstrative aspects, the AP may explicitly indicate a STA to immediately drop unnecessary segments in the group of segments queued at the STA, for example, when one or more previous segments were lost and cannot be recovered at the AP, e.g., as described below.

In some demonstrative aspects, the AP may explicitly indicate the STA to immediately drop unnecessary segments in the group of segments, for example, when link capacity is too low to successfully send all the segments of the group within the latency bound, e.g., as described below.

In other aspects, the AP may explicitly indicate the STA to immediately drop unnecessary segments in the group of segments based on any other additional or alternative reason and/or criteria.

In some demonstrative aspects, device 102, device 140, and/or device 160 may be configured to implement one or more operations and/or functionalities of a stateful packet inspection mechanism, which may be configured to support stateful packet inspection at a WLAN layer of a STA, for example, to efficiently obtain additional information, e.g., application information, which may be required for eBSR, e.g., as described below.

For example, the WLAN layer at the STA may be configured to utilize additional information from an application layer, for example, to identify the group of segments belonging to an application packet, for example, in order to support the STA in generating eBSR information, e.g., as described below.

In some demonstrative aspects, device 102, device 140, and/or device 160 may be configured to implement one or more operations and/or functionalities of a control interface mechanism, which may be configured to support an interface between an AP and an application, e.g., an Edge application, for example, to efficiently supply information, which may be required for operating the enhanced triggered access mechanism.

For example, the control interface between the AP and the Edge application may be configured to support backend communication, for example, to send control information from control applications at the Edge application to the AP.

In some demonstrative aspects, device 102, device 140, and/or device 160 may be configured to implement one or more operations and/or functionalities of an uplink control mechanism, which may be configured to provide a technical solution to support use cases of relatively high device density, e.g., relatively high device and/or sensor density in industrial use-cases, which may provide significant improvements in high traffic scenarios, e.g., as described below.

In some demonstrative aspects, device 102, device 140, and/or device 160 may be configured to implement one or more operations and/or functionalities of an uplink control mechanism, which may be configured to provide a technical solution to efficiently offload and/or consolidate computational tasks from a local application to a remote and/or central application, e.g., an Edge application, e.g., as described below.

In some demonstrative aspects, device 102, device 140, and/or device 160 may be configured to implement one or more operations and/or functionalities of an uplink control mechanism, which may be configured to support improved performance, for example, in terms of lower end-to-end latency and/or improved success rate, for uplink application layer packets, e.g., for real-time applications, e.g., as described below.

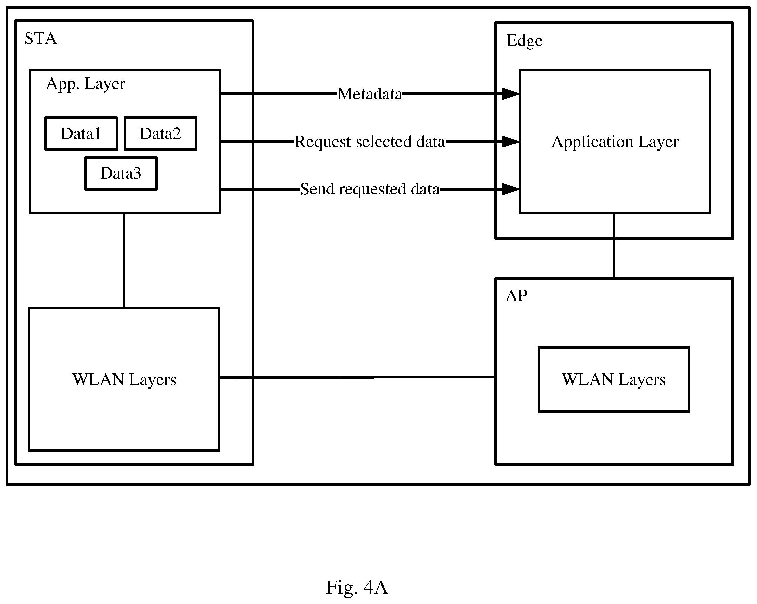

Reference is made to Fig. 4A, which schematically illustrates scheduling goal-oriented communications via application layer control signaling, to illustrate one or more technical aspects, which may be addressed in accordance with some demonstrative aspects.

For example, as shown in Fig. 4A, a control signaling may be utilized between application layers of one or more STAs and an application, e.g., an Edge application, to schedule goal-oriented communications.

For example, as shown in Fig. 4A, the Edge application may be configured to communicate with the application layer to only pull required uplink data from the one or more STAs. However, implementing the control signaling in the application layer may inherently involve longer packet delays, for example, due to scheduling latencies in the air interface.

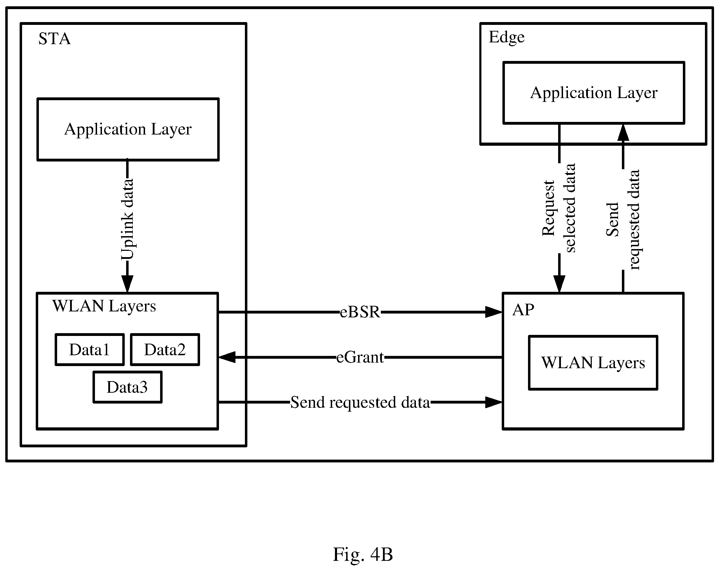

Reference is made to Fig. 4B, which schematically illustrates scheduling goal-oriented communications via lower-layer control signaling, in accordance with some demonstrative aspects.

In some demonstrative aspects, as shown in Fig. 4, a lower-layer control signaling may be configured for scheduling goal-oriented communications to be handled in a layer lower than the application layer, e.g., at one or more WLAN layers of a WLAN protocol stack.

In some demonstrative aspects, as shown in Fig. 4B, a STA and an AP may be configured to utilize a lower-layer control signaling mechanism to schedule uplink transmissions from the STA to the AP, e.g., as described below.

In some demonstrative aspects, the lower-layer control signaling mechanism may include a control signaling mechanism, which may be utilized by one or more layers ("lower-layers"), which are below the application layer, e.g., as described below.

For example, as shown in Fig. 4B, an application layer of the STA may send uplink data (Data1, Data2, Data3), e.g., all uplink data of the application layer, to lower layer of the STAs, e.g., WLAN layers.

For example, as shown in Fig. 4B, the AP may selectively schedule and retrieve the uplink data from the STA, for example, only the uplink data requested by the Edge application.

In some demonstrative aspects, the STA and the AP may be configured to implement one or more operations and/or functionalities of an eBSR mechanism, for example, to support the STA in signaling to the AP information regarding the uplink data queued at the STA, e.g., as described below.

In some demonstrative aspects, the STA and the AP may be configured to implement one or more operations and/or functionalities of an enhanced trigger mechanism, for example, to support the AP in selectively retrieving the uplink data from the STA, for example, according to the uplink data requested by the Edge application, e.g., as described below.

In some demonstrative aspects, the STA and the AP may be configured to implement one or more operations and/or functionalities of an eBSR mechanism, which may be configured to support communicating from the STA to the AP information about a group of segments belonging to a particular application packet. For example, it may not be possible to communicate this information using a BSR method in a Wi-Fi protocol.

For example, the eBSR mechanism may be implemented to provide a technical solution to support the AP in obtaining knowledge about the size of a particular application packet, e.g., as described below.

For example, the eBSR mechanism may be implemented to provide a technical solution to support the AP in determining the amount of uplink resources required to transmit all the segments belonging to an application packet from the STA to the AP, e.g., as described below.

In some demonstrative aspects, the AP and the STA may be configured to implement one or more operations and/or functionalities of a triggered access mechanism, which may be configured to provide a technical solution to support the AP in selectively allocating uplink resources, for example, to specific application packets of particular traffic flows within the STA, e.g., as described below.

For example, the protocol and/or control signaling for goal-oriented communications may be efficiently handled in lower-layers, which provides a scalable solution with low-latency performance.

Referring back to Fig. 1, in some demonstrative aspects, device 102, device 140, and/or device 160 may be configured to implement one or more operations and/or functionalities of an uplink control mechanism, which may be configured to provide a technical solution to support uplink communications from a STA to an AP, e.g., as described below.

In some demonstrative aspects, controller 154 may be configured to control, trigger, cause, and/or instruct a non-AP STA implemented by device 140 to set one or more Segment-Association-Information (SAI) queue-size subfields in a control field, e.g., as described below.

In some demonstrative aspects, the one or more SAI queue-size subfields may be configured to indicate queue sizes of one or more SAI queues at the non-AP STA, e.g., as described below.

In some demonstrative aspects, an SAI queue of the one or more SAI queues may be configured to queue packet segments corresponding to a same application layer packet, e.g., as described below.

In some demonstrative aspects, controller 154 may be configured to control, trigger, cause, and/or instruct the non-AP STA implemented by device 140 to transmit a frame to an AP, e.g., as described below.

In some demonstrative aspects, controller 154 may be configured to control, trigger, cause, and/or instruct the non-AP STA implemented by device 140 to set a MAC header of the frame to include the control field, e.g., as described below.

In some demonstrative aspects, the MAC header may include a frame control field, e.g., as described below.

In some demonstrative aspects, the frame control field may include a control frame extension subfield, which may be, for example, set to a predefined value configured to indicate presence of the control field including the one or more SAI queue-size subfields, e.g., as described below.

In some demonstrative aspects, the MAC header may include a Quality of Service (QoS) control field including a Traffic Identifier (ID) (TID), e.g., as described below.

In some demonstrative aspects, the one or more SAI queues may queue one or more packet segment groups belonging to the TID in the QoS control field, e.g., as described below.

In some demonstrative aspects, the control field including the one or more SAI queue-size subfields may include an eBSR control field, e.g., as described below.

In other aspects, the one or more SAI queue-size subfields may be included in any other type of control field in the MAC header.

In some demonstrative aspects, the control field may include one or more SAI ID subfields corresponding to the one or more SAI queues, e.g., as described below.

In some demonstrative aspects, an SAI ID subfield corresponding to the SAI queue may include an SAI ID to identify the SAI queue, e.g., as described below.

In some demonstrative aspects, controller 154 may be configured to control, trigger, cause, and/or instruct the non-AP STA implemented by device 140 to process an SAI list subfield in a trigger frame from the AP, for example, to identify an SAI ID list of one or more listed SAI IDs corresponding to a predefined SAI-related operation, e.g., as described below.

In some demonstrative aspects, controller 154 may be configured to control, trigger, cause, and/or instruct the non-AP STA implemented by device 140 to perform the predefined SAI-related operation with respect to packet segments queued in SAI queues corresponding to the one or more listed SAI IDs, e.g., as described below.

In some demonstrative aspects, controller 154 may be configured to control, trigger, cause, and/or instruct the non-AP STA implemented by device 140 to process an SAI list subfield in a trigger frame from the AP, for example, to identify a transmission (Tx) SAI ID list of one or more Tx SAI IDs for an uplink transmission to the AP, e.g., as described below.

In some demonstrative aspects, the SAI list subfield may include a Tx SAI ID count subfield, which may be configured to indicate a count of the one or more Tx SAI IDs for the uplink transmission to the AP, e.g., as described below.

In some demonstrative aspects, the Tx SAI ID count subfield may be located before the one or more Tx SAI IDs for the uplink transmission to the AP, e.g., as described below.

In other aspects, the Tx SAI ID count subfield may be located at any other location in the SAI list subfield.

In some demonstrative aspects, controller 154 may be configured to control, trigger, cause, and/or instruct the non-AP STA implemented by device 140 to transmit an uplink transmission to the AP, for example, based on the trigger frame received from the AP, e.g., as described below.

In some demonstrative aspects, the uplink transmission may include packet segments queued in SAI queues corresponding to the one or more Tx SAI IDs, e.g., as described below.

In some demonstrative aspects, controller 154 may be configured to control, trigger, cause, and/or instruct the non-AP STA implemented by device 140 to process the SAI list subfield in the trigger frame from the AP, for example, to identify a drop SAI ID list of one or more dropped SAI IDs to be dropped at the non-AP STA, e.g., as described below.

In some demonstrative aspects, controller 154 may be configured to control, trigger, cause, and/or instruct the non-AP STA implemented by device 140 to drop packet segments queued in SAI queues corresponding to the one or more dropped SAI IDs, e.g., as described below.

In some demonstrative aspects, the SAI list subfield may include a drop SAI ID count subfield, which may be configured to indicate a count of the one or more dropped SAI IDs, e.g., as described below.

In some demonstrative aspects, the drop SAI ID count subfield may be located before the one or more dropped SAI IDs, e.g., as described below.

In other aspects, the drop SAI ID count subfield may be located at any other location in the trigger frame.

In some demonstrative aspects, controller 154 may be configured to control, trigger, cause, and/or instruct the non-AP STA implemented by device 140 to identify that the trigger frame includes the SAI list subfield, for example, based on a determination that an enhanced trigger access subfield in the trigger frame is set to a predefined value to indicate an enhanced trigger access functionality, e.g., as described below.

In some demonstrative aspects, the trigger frame may include a trigger dependent user information (info) subfield corresponding to the non-AP STA, e.g., as described below.

In some demonstrative aspects, the trigger dependent user info subfield may include the SAI list subfield, e.g., as described below.

In some demonstrative aspects, the SAI ID may be configured to uniquely identify the SAI queue from other SAI queues, e.g., as described below.

In some demonstrative aspects, the control field may include an SAI ID count field, for example, to indicate a count of the one or more SAI ID subfields, e.g., as described below.

In some demonstrative aspects, the control field may be configured, for example, according to a field format including an SAI ID count field to indicate a count of the one or more SAI ID subfields, and a sequence of one or more SAI subfield blocks, e.g., as described below.

In some demonstrative aspects, an SAI subfield block of the one or more SAI subfield blocks may include the SAI ID subfield corresponding to the SAI queue and an SAI queue-size subfield corresponding to the SAI queue, e.g., as described below.

In other aspects, the control field may be configured according to any other suitable field format including any other additional or alternative fields.

In some demonstrative aspects, the one or more SAI queue-size subfields may include at least a first SAI queue-size subfield and a second SAI queue-size subfield, e.g., as described below.

In some demonstrative aspects, the first SAI queue-size subfield may be configured to indicate a first queue size of a first SAI queue to queue packet segments corresponding to a first same application layer packet, e.g., as described below.

In some demonstrative aspects, the second SAI queue-size subfield may be configured to indicate a second queue size of a second SAI queue to queue packet segments corresponding to a second same application layer packet, e.g., as described below.

In some demonstrative aspects, controller 154 may be configured to control, trigger, cause, and/or instruct the non-AP STA implemented by device 140 to determine an assignment of buffered Tx packets to one or more packet segment groups corresponding to one or more application layer packets, e.g., as described below.

In some demonstrative aspects, controller 154 may be configured to control, trigger, cause, and/or instruct the non-AP STA implemented by device 140 to assign the buffered Tx packets to the one or more SAI queues, for example, based on the assignment of the buffered Tx packets to the one or more packet segment groups, e.g., as described below.

In some demonstrative aspects, controller 154 may be configured to control, trigger, cause, and/or instruct the non-AP STA implemented by device 140 to determine the assignment of the buffered Tx packets to the one or more packet segment groups, for example, based on packet header information in packet headers of the buffered Tx packets, e.g., as described below.

In some demonstrative aspects, controller 124 may be configured to control, trigger, cause, and/or instruct an AP implemented by device 102 to process a control field in a MAC header of a frame from a non-AP STA to identify one or more SAI queues, for example, based on one or more SAI ID subfields, e.g., as described below.

In some demonstrative aspects, the frame received by the AP implemented by device 102 may include the frame transmitted by the non-AP STA implemented by device 140, e.g., as described above.

In some demonstrative aspects, controller 124 may be configured to control, trigger, cause, and/or instruct the AP implemented by device 102 to identify queue sizes of the one or more SAI queues, for example, based on one or more SAI queue-size subfields, e.g., as described below.

In some demonstrative aspects, an SAI ID subfield may include an SAI ID to identify an SAI queue of the one or more SAI queues, e.g., as described below.

In some demonstrative aspects, the SAI queue may be configured to queue packet segments corresponding to a same application layer packet, e.g., as described below.

In some demonstrative aspects, controller 124 may be configured to control, trigger, cause, and/or instruct the AP implemented by device 102 to determine at least one predefined SAI-related operation to be applied by the non-AP STA with respect to packet segments queued in one or more identified SAI queues of the one or more SAI queues, e.g., as described below.

In some demonstrative aspects, controller 124 may be configured to control, trigger, cause, and/or instruct the AP implemented by device 102 to transmit a trigger frame to the non-AP STA, e.g., as described below.

In some demonstrative aspects, the trigger frame may include an SAI list subfield including an SAI ID list of one or more listed SAI IDs corresponding to the one or more identified SAI queues, e.g., as described below.

In some demonstrative aspects, the MAC header of the frame from the non-AP STA, e.g., the non-AP STA implemented by device 140, may include a frame control field, e.g., as described below.

In some demonstrative aspects, the frame control field may include a control frame extension subfield set to a predefined value, which may be configured to indicate presence of the control field including the one or more SAI queue-size subfields, e.g., as described below.

In some demonstrative aspects, the MAC header of the frame from the non-AP STA may include a QoS control field including a TID. For example, the one or more SAI queues may queue one or more packet segment groups belonging to the TID, e.g., as described below.

In some demonstrative aspects, the control field including the one or more SAI queue-size subfields may include an eBSR control field, e.g., as described below.

In other aspects, the MAC header may include any other additional or alternative type of control field including the one or more SAI queue-size subfields.

In some demonstrative aspects, the at least one predefined SAI-related operation, which is determined by the AP to be applied by the non-AP STA, may include an uplink transmission from the non-AP STA to the AP, e.g., as described below.

In some demonstrative aspects, the SAI list subfield in the trigger frame may include a Tx SAI ID list of one or more Tx SAI IDs for the uplink transmission, e.g., as described below.

In some demonstrative aspects, the uplink transmission may include packet segments queued in SAI queues corresponding to the one or more Tx SAI IDs, e.g., as described below.

In some demonstrative aspects, the SAI list subfield may include a Tx SAI ID count subfield configured to indicate a count of the one or more Tx SAI IDs for the uplink transmission, e.g., as described below.

In some demonstrative aspects, the Tx SAI ID count subfield may be located before the one or more Tx SAI IDs for the uplink transmission, e.g., as described below.

In other aspects, the Tx SAI ID count subfield may be located at any other location in the SAI list subfield.

In some demonstrative aspects, the at least one predefined SAI-related operation may include a drop operation, e.g., as described below.

In some demonstrative aspects, the SAI list subfield may include a drop SAI ID list of one or more dropped SAI IDs to be dropped at the non-AP STA, e.g., as described below.

In some demonstrative aspects, the drop SAI ID list may be configured to indicate that the non-AP STA is to drop packet segments queued in SAI queues corresponding to the one or more dropped SAI IDs, e.g., as described below.

In some demonstrative aspects, the SAI list subfield may include a drop SAI ID count subfield configured to indicate a count of the one or more dropped SAI IDs, e.g., as described below.

In some demonstrative aspects, the drop SAI ID count subfield may be located before the one or more dropped SAI IDs, e.g., as described below.

In other aspects, the drop SAI ID count subfield may be located at any other location in the SAI list subfield.

In some demonstrative aspects, controller 124 may be configured to control, trigger, cause, and/or instruct the AP implemented by device 102 to set an enhanced trigger access subfield in the trigger frame to a predefined value to indicate an enhanced trigger access functionality, e.g., as described below.

In some demonstrative aspects, the trigger frame may include a trigger dependent user info subfield corresponding to the non-AP STA. For example, the trigger dependent user info subfield may include the SAI list subfield, e.g., as described below.

In some demonstrative aspects, the SAI ID may be configured to uniquely identify the SAI queue from other SAI queues, e.g., as described below.

In some demonstrative aspects, the control field may include an SAI ID count field to indicate a count of the one or more SAI ID subfields, e.g., as described below.

In some demonstrative aspects, the control field may be configured, for example, according to a field format, which may include an SAI ID count field to indicate a count of the one or more SAI ID subfields, and a sequence of one or more SAI subfield blocks, e.g., as described below.

In some demonstrative aspects, an SAI subfield block of the one or more SAI subfield blocks may include the SAI ID subfield corresponding to the SAI queue and an SAI queue-size subfield corresponding to the SAI queue, e.g., as described below.

In some demonstrative aspects, the one or more SAI queue-size subfields may include at least a first SAI queue-size subfield and a second SAI queue-size subfield, e.g., as described below.

In some demonstrative aspects, the first SAI queue-size subfield may indicate a first queue size of a first SAI queue to queue packet segments corresponding to a first same application layer packet, e.g., as described below.

In some demonstrative aspects, the second SAI queue-size subfield may indicate a second queue size of a second SAI queue to queue packet segments corresponding to a second same application layer packet, e.g., as described below.

In some demonstrative aspects, device 102, device 140, and/or device 160 may be configured to implement one or more operations and/or functionalities of an eBSR mechanism, which may be configured to support signaling, indicating, passing, sending, transmitting, and/or communicating, one or more SAI queue-size subfields from a STA to an AP, e.g., as described below.

For example, the one or more SAI queue-size subfields may be configured to specify associated data amount at a Layer 2 (L2), e.g., amount of L2 buffer data, which includes a group of segments associated with the same application packet.

In some demonstrative aspects, the eBSR mechanism may be configured to support communicating the one or more SAI queue-size subfields as part of a control frame, which may be communicated from anon-AP STA to an AP, e.g., as described below.

In some demonstrative aspects, the eBSR mechanism may be configured to support communicating the one or more SAI queue-size subfields, for example, in an eBSR control field of a MAC header of a frame communicated from the non-AP STA to the AP, e.g., as described below.

In some demonstrative aspects, the eBSR control field may be configured to include one or more parameters to carry information about associated segments at a WLAN MAC transmission buffer of a STA transmitting the frame including the eBSR control field, e.g., as described below.

For example, it may be defined that a MAC layer in a WLAN may identify and keep track of the associated segments in the WLAN MAC transmission buffer, for example, by using header information in packets, for example, via stateful packet inspection, e.g., as described below.

In other aspects, the eBSR mechanism may be configured to support any other additional or alternative techniques and/or field formats to support a STA in indicating one or more SAI queue-sizes to an AP.

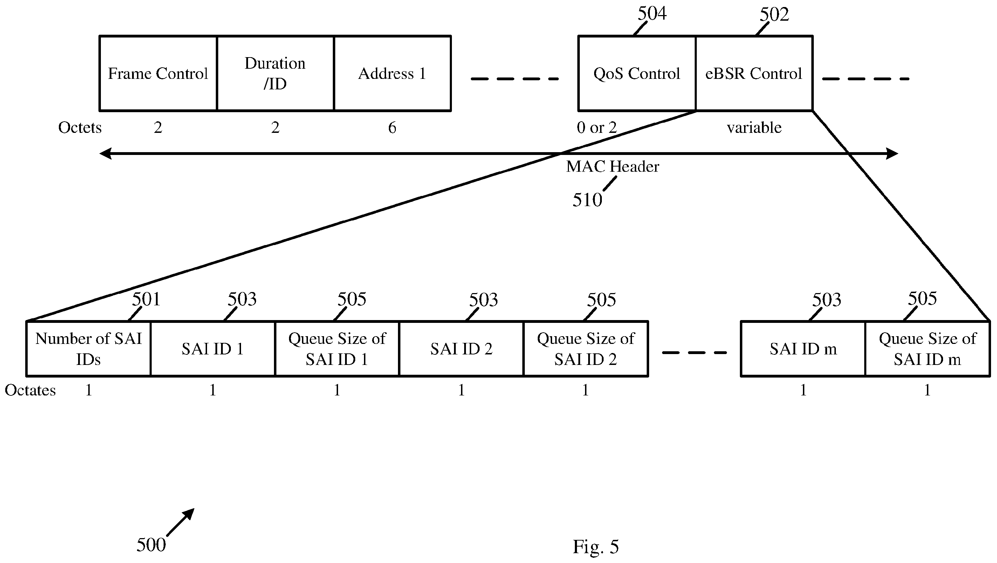

Reference is made to Fig. 5, which schematically illustrates an eBSR control field format 500, in accordance with some demonstrative aspects.

In some demonstrative aspects, device 102 (Fig. 1), device 140 (Fig. 1), and/or device 160 (Fig. 1) may be configured to generate, transmit, receive and/or process a frame including a MAC header 510 including an eBSR control field 502 configured according to the eBSR control field format 500.

For example, a presence of the eBSR control field 502 may be indicated, for example, by setting one of reserved values, e.g., one of the values 1011-1111, in a control frame extension, e.g., in accordance with the *IEEE 802.11-2020 Standard.* For example, it may be defined that a predefined value, e.g., one of the values 1011-1111 or any other suitable value, is to be set in a control frame extension of a frame, for example, to indicate that the frame is an eBSR frame including the eBSR field 502.

For example, the eBSR control field 502 may include one or more SAI queue-size subfields to indicate queue sizes of one or more SAI queues at a non-AP STA from which the frame is transmitted.

For example, as shown in Fig. 5, the eBSR control field 502 may include one or more SAI ID subfields corresponding to the one or more SAI queues.

For example, the eBSR control field 502 may carry the one or more SAI ID subfields corresponding to SAI queues for each group of segments in a transmission buffer belonging to a TID indicated in a QoS control field 504 of the MAC header 510.

For example, the eBSR control field 502 may have a variable length, for example, since a number of groups of segments in the transmission buffer may vary dynamically.

For example, the non-AP STA may send to an AP a plurality of frames to report one or more eBSRs for different TIDs. In one example, each frame of the plurality of frames may include either a QoS null frame or QoS data frame.

In some demonstrative aspects, as shown in Fig. 5, the eBSR control field 502 may include an SAI ID count field 501 (also referred to as "number of SAI IDs") to indicate a count of the one or more SAI ID subfields included in the eBSR control field 502.

For example, the SAI ID count field 501 may indicate the number of SAIs, e.g., each for a group of segments that the eBSR control field 502 is carrying.

In one example, as shown in Fig. 5, the SAI ID count field 501 may have a length of 8 bits, which may allow for up to 255 SAIs to be carried in a single frame. In another example, the SAI ID count field 501 may have any other length.

In some demonstrative aspects, as shown in Fig. 5, the eBSR control field 502 may include one or more SAI ID subfields 503. For example, an SAI ID subfield, e.g., each SAI ID subfield 503, may include any SAI ID to uniquely identify a group of segments belonging to an application packet.

In one example, an SAI ID subfield 503 of the one or more SAI ID subfields 503 may have a length of 8 bits. In another example, the SAI ID subfield 503 may have any other length.

In some demonstrative aspects, as shown in Fig. 5, the eBSR control field 502 may include one or more SAI ID queue-size subfields 505 to indicate sizes of one or more buffers of associated data/segments of application packets identified by the one or more SAI ID subfields 503.

For example, as shown in Fig. 5, an SAI ID queue-size subfield 505 corresponding to an SAI ID subfield 503 may be configured to indicate a size of a buffer of associated data/segments of an application packet identified by the corresponding SAI ID subfield 503.

For example, SAI ID queue-size subfields 505 may be configured to indicate a buffer size according to buffer size levels (in bytes), which may be defined, for example, in accordance with the *IEEE 802.11ax-2021 Standard.* In other aspects, the SAI ID queue-size subfields 505 may be configured to indicate a buffer sizes according to any other signaling mechanism.

In one example, an SAI ID subfield 505 may have a length of 8 bits. In another example, the SAI ID subfield 505 may have any other length.

Referring back to Fig. 1, in some demonstrative aspects, device 102, device 140, and/or device 160 may be configured to implement one or more operations and/or functionalities of an enhanced trigger frame mechanism, which may be configured to support an enhanced trigger frame to be communicated from an AP to one or more STAs, e.g., as described below.

In some demonstrative aspects, the enhanced trigger frame mechanism may be configured to support an enhanced trigger frame, which may be configured to provide a technical solution to support an AP in explicitly assigning an uplink allocation to particular groups of segments identified by one or more SAI IDs, e.g., as described below.

In some demonstrative aspects, the enhanced trigger frame mechanism may be configured to support an enhanced trigger frame, which may be configured to provide a technical solution to support an AP in explicitly informing the one or more STAs to drop certain data in uplink buffers, for example, as this dropped data may not be required to be transmitted, e.g., as described below.

For example, the AP may decide to instruct a STA drop one or more segments of a particular group of segments, for example, based on a determination that a certain number of segments of this group of segments were not successfully received at the AP. For example, upon determining that the certain number of segments of the group of segments were not successfully received at the AP, the AP may select to instruct the STA to drop any remaining segments in this group of segments.

In some demonstrative aspects, the enhanced trigger frame mechanism may be configured to provide a technical solution to support the AP to use the enhanced trigger frame, for example, to dynamically influence multiplexing and/or prioritization procedures at the STA, for example, in order to maximize the uplink resource usage efficiency, e.g., as described below.

For example, this ability of the AP to dynamically influence the multiplexing and/or prioritization procedures at the STA may provide a technical advantage, for example, compared to a scheduling mechanism, which may be based on an AP allocating uplink resource units to an STA, and the STA determining TIDs, and the multiplexing and prioritization of different traffic flows within a TID, for example, based on a set of configured rules.

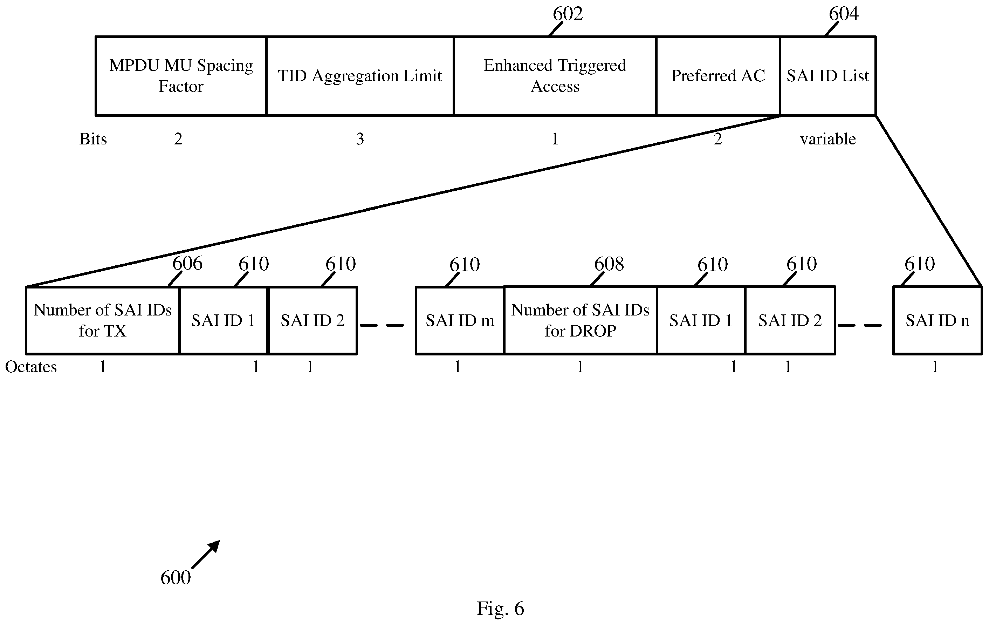

Reference is made to Fig. 6, which schematically illustrates a trigger dependent user info field according to an enhanced trigger frame format 600, in accordance with some demonstrative aspects.

For example, an AP, e.g., an AP implemented by device 102 (Fig. 1) may transmit to a non-AP STA, e.g., a non-AP STA implemented by device 140 (Fig. 1), a trigger frame including a trigger dependent user info field configured according to enhanced trigger frame format 600, e.g., as described below.

For example, an enhanced trigger frame may be identified, for example, by setting one of reserved values, e.g., one of the values 8-15, in a trigger type subfield, e.g., in accordance with the *IEEE 802.11ax-2021 Standard.* For example, it may be defined that a predefined value, e.g., one of the values 8-15 or any other suitable value, is to be set in a trigger type subfield of a trigger frame, for example, to indicate that the trigger frame is an enhanced trigger frame.

For example, the enhanced trigger frame may include one or more, e.g., some or all, of the fields as a basic trigger frame type, for example, including a common info field and/or user info list fields, e.g., in accordance with the *IEEE 802.11ax-2021 Standard.*

For example, the user info list field may include zero or more user info fields, e.g., in accordance with the *IEEE 802.11ax-2021 Standard.*

For example, one or more, e.g., each, of the user info fields in the enhanced trigger frame may include a trigger dependent user info field configured according to the enhanced trigger frame format 600, e.g., as described below.

For example, the trigger dependent user info field 600 may include an enhanced triggered access subfield 602, for example, to indicate whether enhanced triggered access information is present in the trigger dependent user info field 600 for a corresponding user. For example, the corresponding user may be identified by an AID12 subfield in the trigger frame.

In one example, the enhanced triggered access subfield 602 may have a predetermined length of 1 bit. In another example, the enhanced triggered access subfield 602 may have any other length.

For example, the enhanced triggered access subfield 602 may be set to a value 1, for example, to indicate that an SAI ID list subfield 604 is present in the trigger dependent user info field 600.

For example, the AP may utilize the enhanced triggered access subfield 602, for example, to supply SAI ID list information only to selected users which are enabled to implement an enhanced triggered access mechanism.

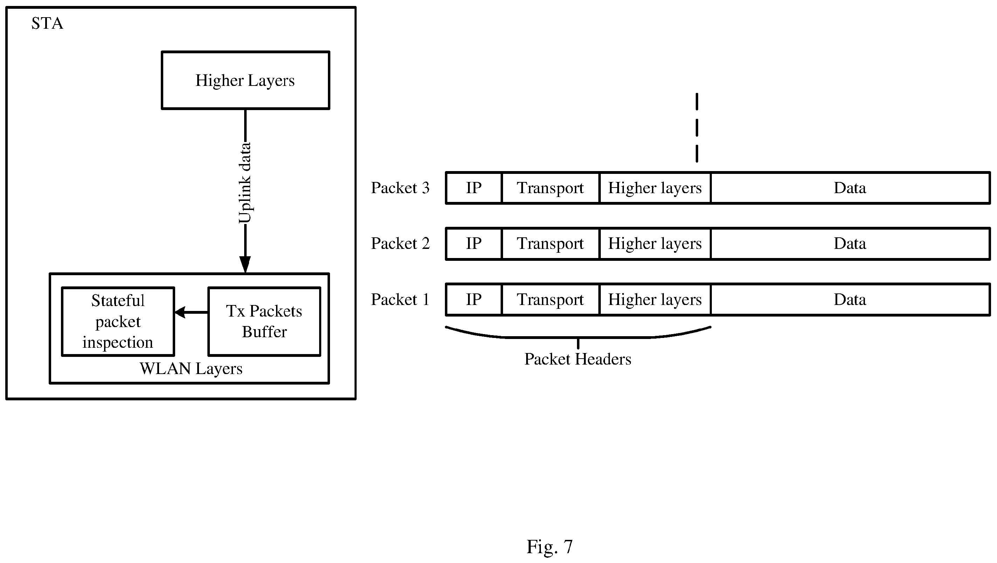

For example, the SAI ID list subfield 604 may provide additional allocation information to the selected users that are enabled for the enhanced triggered access. For example, as shown in Fig 7, the SAI ID list subfield 604 may have a variable size. For example, the presence of the SAI ID list subfield 604 may be indicated by setting the enhanced triggered access subfield 602 to 1.

For example, the SAI ID list subfield 604 may include a number of SAI IDs for TX subfield 606, for example, having length of 8 bits or any other length.

For example, the number of SAI IDs for TX subfield 606 may indicate a number of one or more SAI IDs in a message for which the uplink resources are allocated for transmission.

For example, the SAI ID list subfield 604 may include a number of SAI IDs for DROP subfield 608, for example, having length of 8 bits or any other length.

For example, the number of SAI IDs for DROP subfield 608 may indicate a number of one or more SAI IDs for which the corresponding data needs to be dropped at the STA.

For example, the AP may utilize the number of SAI IDs for DROP subfield 608 to explicitly inform the STA to drop certain data frames in the uplink transmission buffer belonging to specific SAI-IDs.

For example, the SAI ID list subfield 604 may include one or more SAI ID subfields 610, for example, having length of 8 bits or any other length.

For example, an SAI ID subfield 610 may identify, e.g., uniquely identify, a group of segments belonging to an application packet.

For example, a set of one or more SAI IDs subfields 610, e.g., immediately following the number of SAI IDs for TX subfield 606, may be configured to identify one or more respective groups of segments that have uplink allocation for transmission.

For example, a set of one or more SAI IDs subfields 610, e.g., immediately following the number of SAI IDs for DROP subfield 608, may be configured to identify one or more groups of segments that need to be dropped.

Reference is made to Fig. 7, which schematically illustrates a stateful packet inspection at a WLAN layer, in accordance with some demonstrative aspects.

For example, a STA, e.g., a STA implemented by device 140 (Fig. 1), may perform the stateful packet inspection at the WLAN layer, for example, to group one or more packets originating from a segmentation of an application layer packet, for example, to support generation of eBSR information.

For example, as shown in Fig. 7, the STA may efficiently identify a plurality of segments of a group, for example, through stateful inspection of each packet, which may mainly involve fetching IP and/or transport layer headers.

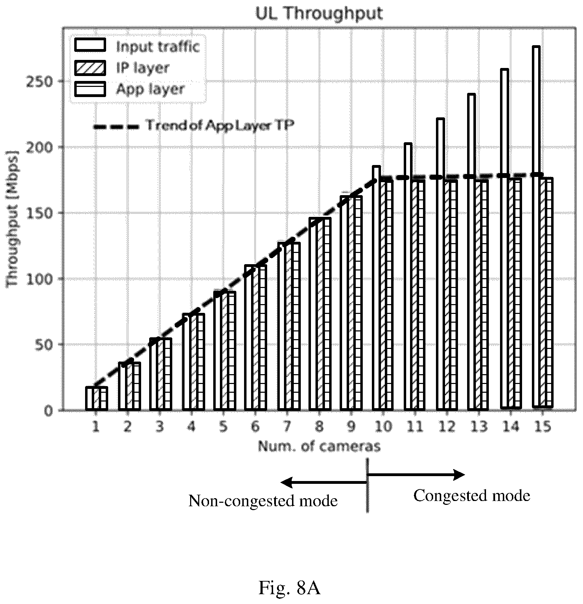

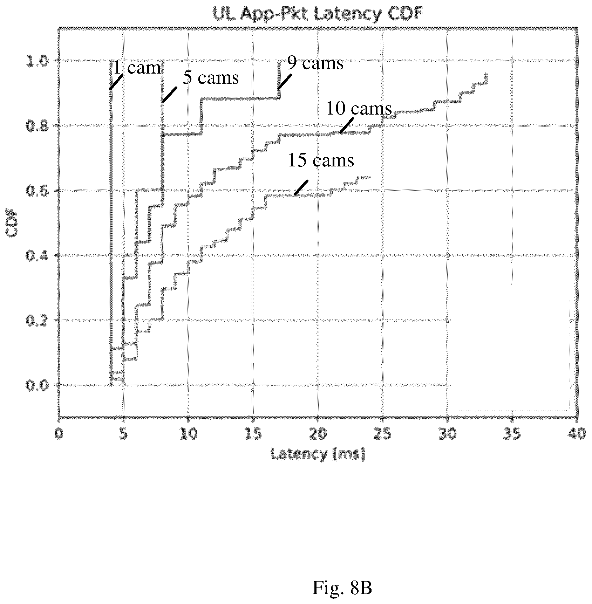

For example, as shown in Fig. 8, the STA may process the packet headers, for example, to identify basic information, e.g., source and/or destination IP addresses, port numbers, segmentation sequence numbers, and/or any other additional or alternative suitable information.

For example, the STA may obtain use this stateful packet inspection to obtain group segment information for a group of segments at the WLAN layer. For example, the STA may generate an eBSR frame, for example, based on the group segment information.

Reference is made to Fig. 8A, which schematically illustrates simulated throughput as a function of a number of cameras in a system, and to Fig. 8B, which schematically illustrates an uplink application packet latency CDF as a function of the number of cameras in the system, in accordance with some demonstrative aspects.

For example, performance of a system, e.g., system 100 (Fig. 1), which utilizes an eBSR mechanism and/or an enhanced trigger frame mechanism, may be evaluated in a simulation platform with simulation parameter settings similar to the settings in Table 1.

For example, the simulation may be applied with respect to an AP scheduler, which may perform resource allocation, for example, by considering segment association information based on the eBSR mechanism, and/or the enhanced triggered access mechanism.

For example, as shown in Fig. 8A, the simulated throughput shows significant performance improvements, e.g., particularly in high traffic scenarios, for example, compared to simulation results of a system that does not implement the eBSR mechanism and/or the enhanced triggered access mechanism, e.g., as described above with reference to Fig. 3A.

For example, as shown in Fig. 8A, an application layer throughput may be maintained close to a system capacity, for example, even with 10 or more cameras in the system, e.g., as opposed to the very low application layer throughput performance shown in Fig. 3A.

For example, as shown in Fig. 8B, the uplink application packet latency CDF may show significant improvement, for example, compared to the simulation results shown in Fig. 3B.

For example, as shown in Fig. 8B, an uplink application packet latency with 10 or more cameras may be significantly lower than the latency achieved by the simulation results shown in Fig. 3B.

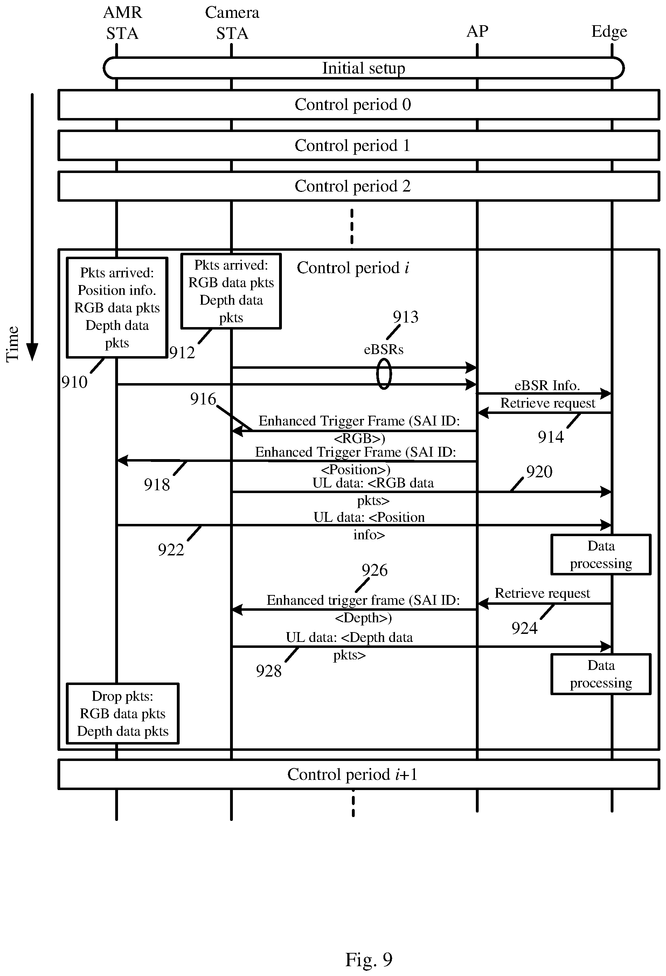

Reference is made to Fig. 9, which schematically illustrates goal-oriented communications via lower-layer control signaling, in accordance with some demonstrative aspects.

For example, as shown in Fig. 9, two STAs may perform goal-oriented communications, for example, via lower-layer signaling.

For example, a first STA, e.g., an AMR STA, may generate periodic uplink data 910, for example, through three traffic flows, each including information regarding an AMR position, RGB data, and/or depth data.

For example, a second STA, e.g., a camera STA, may generate periodic uplink data 912, for example, through two uplink traffic flows, each including information regarding RGB data, and/or depth data.

For example, as shown in Fig. 9, the STAs, e.g., the AMR STA and the camera STA, may send one or more eBSRs 913 to an AP, for example when periodic uplink data 910 and periodic uplink data 912 (also referred to as "periodic application packets") arrive at the STAs.

For example, the one or more eBSRs 913 may provide information about buffer sizes, and/or application packet sizes, and their identities, e.g., SAI-IDs. In one example, application packets may be split across multiple Internet Protocol (IP) packets.

For example, as shown in Fig. 9, an Edge intelligence application may send retrieve requests 914 to the AP, for example, to retrieve specific uplink application packets from the STAs.

For example, the AP may allocate uplink resource units to the STAs, for example, through an enhanced trigger frame, e.g., by which the AP may assign uplink resources to specific application packets, for example, based on the information in the eBSRs 913.

For example, as shown in Fig. 9, the AP may allocate uplink resources to an RGB data packet in the camera STA, for example, through an enhanced trigger frame 916.

For example, as shown in Fig. 9, the AP may allocate uplink resources to a position information packet in the AMR STA, for example, through an enhanced trigger frame 918.

For example, as shown in Fig. 9, the STAs, e.g., the AMR STA and/or the camera STA, may selectively send IP packets to the AP, e.g., only the IP packets belonging to the requested application packets in the allocated uplink resources to the Edge applications.

For example, as shown in Fig. 9, the camera STA may selectively send to the AP IP packets of an RGB data packets 920, for example, based on a request in the enhanced trigger frame 916.

For example, as shown in Fig. 9, the AMR STA may selectively send to the AP IP packets of a position information packet 922, for example, based on a request in the enhanced trigger frame 918.

For example, the Edge application may determine that other uplink data from the STAs are required, for example, after processing the retrieved uplink data packets.

For example, the Edge application may detect an object using RGB data sent by the camera STA. According to this example, the Edge application may determine that depth data is required for further processing.

For example, as shown in Fig. 9, the Edge application may send additional retrieve requests, e.g., retrieve request 924, within the same control loop period, for example, to retrieve additional data for further processing.

For example, as shown in Fig. 9, the AP may allocate uplink resources to a depth data packet in the camera STA, for example, through an enhanced trigger frame 926.

For example, as shown in Fig. 9, the camera STA may selectively send to the AP IP packets of a depth data packet 928, for example, based on a request in the enhanced trigger frame 926.

For example, as shown in Fig. 9, the Edge application may efficiently retrieve only the required uplink data, for example, through low latency lower-layer control signaling.

For example, as shown in Fig. 9, at the end of a control period, the STAs may automatically drop the application packets that were not retrieved. For example, the AMR STA may drop RGB and depth data packets as they were not accessed by the Edge application.

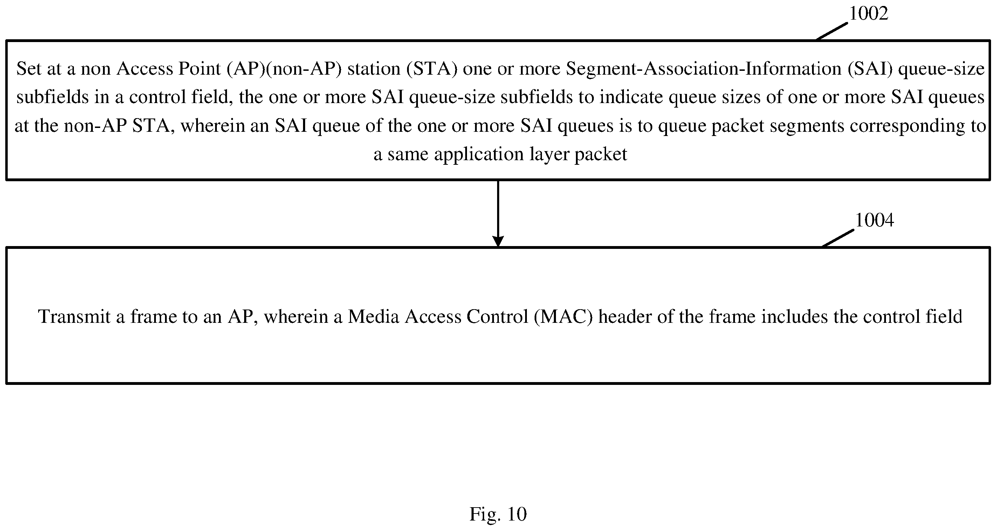

Reference is made to Fig. 10, which schematically illustrates a method of signaling SAI queue-size information for communication of application layer packets, in accordance with some demonstrative aspects. For example, one or more of the operations of the method of Fig. 10 may be performed by one or more elements of a system, e.g., system 100 (Fig. 1), for example, one or more wireless devices, e.g., device 102 (Fig. 1), device 140 (Fig. 1), and/or device 160 (Fig. 1), a controller, e.g., controller 124 (Fig. 1) and/or controller 154 (Fig. 1), a radio, e.g., radio 114 (Fig. 1) and/or radio 144 (Fig. 1), and/or a message processor, e.g., message processor 128 (Fig. 1) and/or message processor 158 (Fig. 1).

As indicated at block 1002, the method may include setting, at a non-AP STA, one or more SAI queue-size subfields in a control field. For example, the one or more SAI queue-size subfields may indicate queue sizes of one or more SAI queues at the non-AP STA. For example, an SAI queue of the one or more SAI queues may be configured to queue packet segments corresponding to a same application layer packet. For example, controller 154 (Fig. 1) may be configured to cause, trigger, and/or control a non-AP STA implemented by device 140 (Fig. 1) to set the one or more SAI queue-size subfields in the control field, e.g., as described above.

As indicated at block 1004, the method may include transmitting a frame including the control field in a MAC header of the frame to the AP. For example, controller 154 (Fig. 1) may be configured to cause, trigger, and/or control the non-AP STA implemented by device 140 (Fig. 1) to transmit the frame including the control field in the MAC header of the frame to the AP, e.g., as described above.

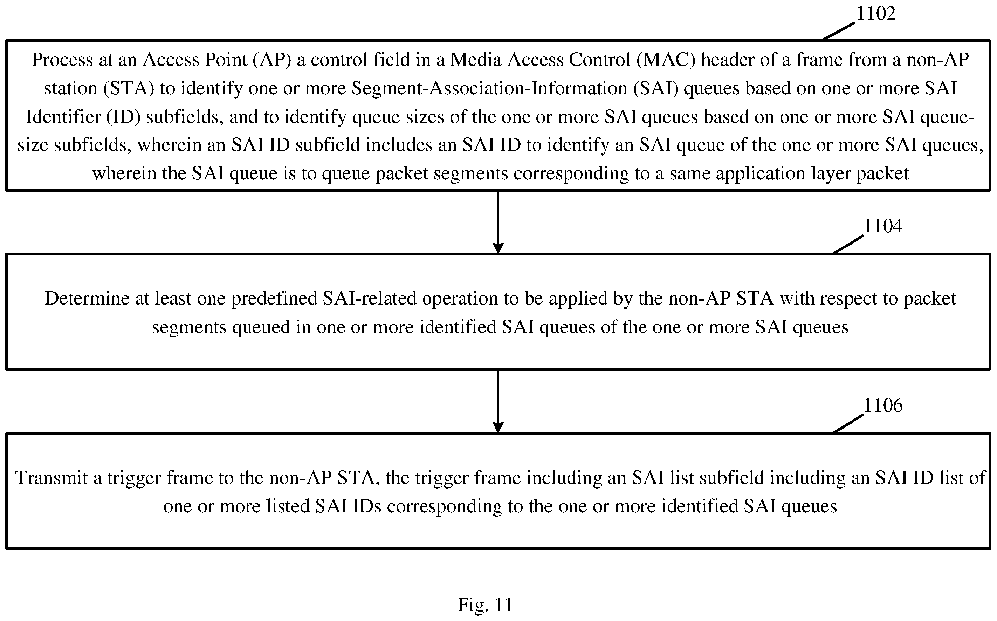

Reference is made to Fig. 11, which schematically illustrates a method of method of signaling SAI queue-size information for communication of application layer packets, in accordance with some demonstrative aspects. For example, one or more of the operations of the method of Fig. 11 may be performed by one or more elements of a system, e.g., system 100 (Fig. 1), for example, one or more wireless devices, e.g., device 102 (Fig. 1), device 140 (Fig. 1), and/or device 160 (Fig. 1), a controller, e.g., controller 124 (Fig. 1) and/or controller 154 (Fig. 1), a radio, e.g., radio 114 (Fig. 1) and/or radio 144 (Fig. 1), and/or a message processor, e.g., message processor 128 (Fig. 1) and/or message processor 158 (Fig. 1).

As indicated at block 1102, the method may include processing, at an AP, a control field in a MAC header of a frame from a non-AP STA to identify one or more SAI queues, for example, based on one or more SAI ID subfields, and to identify queue sizes of the one or more SAI queues, for example, based on one or more SAI queue-size subfields. For example, an SAI ID subfield may include an SAI ID to identify an SAI queue of the one or more SAI queues. For example, the SAI queue may queue packet segments corresponding to a same application layer packet. For example, controller 124 (Fig. 1) may be configured to cause, trigger, and/or control an AP implemented by device 102 (Fig. 1) to process the control field in the MAC header of the frame from the non-AP STA to identify one or more SAI queues, for example, based on one or more SAI ID subfields, e.g., as described above. For example, controller 124 (Fig. 1) may be configured to cause, trigger, and/or control the AP implemented by device 102 (Fig. 1) to process the control field in the MAC header of the frame from the non-AP STA identify queue sizes of the one or more SAI queues, for example, based on one or more SAI queue-size subfields, e.g., as described above.

As indicated at block 1104, the method may include determining at least one predefined SAI-related operation to be applied by the non-AP STA with respect to packet segments queued in one or more identified SAI queues of the one or more SAI queues. For example, controller 124 (Fig. 1) may be configured to cause, trigger, and/or control the AP implemented by device 102 (Fig. 1) to determine at least one predefined SAI-related operation to be applied by the non-AP STA with respect to packet segments queued in one or more identified SAI queues of the one or more SAI queues, e.g., as described above.

As indicated at block 1106, the method may include transmitting a trigger frame to the non-AP STA. For example, the trigger frame may include an SAI list subfield including an SAI ID list of one or more listed SAI IDs corresponding to the one or more identified SAI queues. For example, controller 124 (Fig. 1) may be configured to cause, trigger, and/or control the AP implemented by device 102 (Fig. 1) to transmit a trigger frame to the non-AP STA, the trigger frame including an SAI list subfield including an SAI ID list of one or more listed SAI IDs corresponding to the one or more identified SAI queues, e.g., as described above.

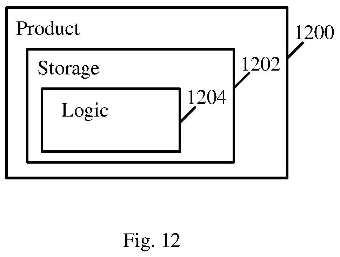

Reference is made to Fig. 12, which schematically illustrates a product of manufacture 1200, in accordance with some demonstrative aspects. Product 1200 may include one or more tangible computer-readable ("machine-readable") non-transitory storage media 1202, which may include computer-executable instructions, e.g., implemented by logic 1204, operable to, when executed by at least one computer processor, enable the at least one computer processor to implement one or more operations at device 102 (Fig. 1), device 140 (Fig. 1), device 160 (Fig. 1), controller 124 (Fig. 1), controller 154 (Fig. 1), message processor 128 (Fig. 1), message processor 158 (Fig. 1), radio 114 (Fig. 1), radio 144 (Fig. 1), transmitter 118 (Fig. 1), transmitter 148 (Fig. 1), receiver 116 (Fig. 1), and/or receiver 146 (Fig. 1); to cause device 102 (Fig. 1), device 140 (Fig. 1), device 160 (Fig. 1), controller 124 (Fig. 1), controller 154 (Fig. 1), message processor 128 (Fig. 1), message processor 158 (Fig. 1), radio 114 (Fig. 1), radio 144 (Fig. 1), transmitter 118 (Fig. 1), transmitter 148 (Fig. 1), receiver 116 (Fig. 1), and/or receiver 146 (Fig. 1) to perform, trigger and/or implement one or more operations and/or functionalities; and/or to perform, trigger and/or implement one or more operations and/or functionalities described with reference to the Figs. 1-11, and/or one or more operations described herein. The phrases "non-transitory machine-readable medium" and "computer-readable non-transitory storage media" may be directed to include all machine and/or computer readable media, with the sole exception being a transitory propagating signal.

In some demonstrative aspects, product 1200 and/or machine readable storage media 1202 may include one or more types of computer-readable storage media capable of storing data, including volatile memory, non-volatile memory, removable or non-removable memory, erasable or non-erasable memory, writeable or re-writeable memory, and the like. For example, machine readable storage media 1202 may include, RAM, DRAM, Double-Data-Rate DRAM (DDR-DRAM), SDRAM, static RAM (SRAM), ROM, programmable ROM (PROM), erasable programmable ROM (EPROM), electrically erasable programmable ROM (EEPROM), flash memory (e.g., NOR or NAND flash memory), content addressable memory (CAM), polymer memory, phase-change memory, ferroelectric memory, silicon-oxide-nitride-oxide-silicon (SONOS) memory, a disk, a hard drive, and the like. The computer-readable storage media may include any suitable media involved with downloading or transferring a computer program from a remote computer to a requesting computer carried by data signals embodied in a carrier wave or other propagation medium through a communication link, e.g., a modem, radio or network connection.

In some demonstrative aspects, logic 1204 may include instructions, data, and/or code, which, if executed by a machine, may cause the machine to perform a method, process and/or operations as described herein. The machine may include, for example, any suitable processing platform, computing platform, computing device, processing device, computing system, processing system, computer, processor, or the like, and may be implemented using any suitable combination of hardware, software, firmware, and the like.

In some demonstrative aspects, logic 1204 may include, or may be implemented as, software, a software module, an application, a program, a subroutine, instructions, an instruction set, computing code, words, values, symbols, and the like. The instructions may include any suitable type of code, such as source code, compiled code, interpreted code, executable code, static code, dynamic code, and the like. The instructions may be implemented according to a predefined computer language, manner or syntax, for instructing a processor to perform a certain function. The instructions may be implemented using any suitable high-level, low-level, object-oriented, visual, compiled and/or interpreted programming language, machine code, and the like.

### EXAMPLES

The following examples pertain to further aspects.

Example 1 includes an apparatus comprising logic and circuitry configured to cause a non Access Point (AP) (non-AP) station (STA) to set one or more Segment-Association-Information (SAI) queue-size subfields in a control field, the one or more SAI queue-size subfields to indicate queue sizes of one or more SAI queues at the non-AP STA, wherein an SAI queue of the one or more SAI queues is to queue packet segments corresponding to a same application layer packet; and transmit a frame to an AP, wherein a Media Access Control (MAC) header of the frame comprises the control field.

Example 2 includes the subject matter of Example 1, and optionally, wherein the control field comprises one or more SAI Identifier (ID) subfields corresponding to the one or more SAI queues, wherein an SAI ID subfield corresponding to the SAI queue comprises an SAI ID to identify the SAI queue.

Example 3 includes the subject matter of Example 2, and optionally, wherein the apparatus is configured to cause the non-AP STA to process an SAI list subfield in a trigger frame from the AP to identify an SAI ID list of one or more listed SAI IDs corresponding to a predefined SAI-related operation; and perform the predefined SAI-related operation with respect to packet segments queued in SAI queues corresponding to the one or more listed SAI IDs.

Example 4 includes the subject matter of Example 2 or 3, and optionally, wherein the apparatus is configured to cause the non-AP STA to process an SAI list subfield in a trigger frame from the AP to identify a transmission (Tx) SAI ID list of one or more Tx SAI IDs for an uplink transmission to the AP; and transmit an uplink transmission to the AP based on the trigger frame, the uplink transmission comprising packet segments queued in SAI queues corresponding to the one or more Tx SAI IDs.

Example 5 includes the subject matter of Example 4, and optionally, wherein the SAI list subfield comprises a Tx SAI ID count subfield configured to indicate a count of the one or more Tx SAI IDs for the uplink transmission to the AP, wherein the Tx SAI ID count subfield is before the one or more Tx SAI IDs for the uplink transmission to the AP.

Example 6 includes the subject matter of any one of Examples 2-5, and optionally, wherein the apparatus is configured to cause the non-AP STA to process an SAI list subfield in a trigger frame from the AP to identify a drop SAI ID list of one or more dropped SAI IDs to be dropped at the non-AP STA; and drop packet segments queued in SAI queues corresponding to the one or more dropped SAI IDs.

Example 7 includes the subject matter of Example 6, and optionally, wherein the SAI list subfield comprises a drop SAI ID count subfield configured to indicate a count of the one or more dropped SAI IDs, wherein the drop SAI ID count subfield is before the one or more dropped SAI IDs.

Example 8 includes the subject matter of any one of Examples 3-7, and optionally, wherein the apparatus is configured to cause the non-AP STA to identify that the trigger frame comprises the SAI list subfield based on a determination that an enhanced trigger access subfield in the trigger frame is set to a predefined value to indicate an enhanced trigger access functionality.

Example 9 includes the subject matter of any one of Examples 3-8, and optionally, wherein the trigger frame comprises a trigger dependent user information (info) subfield corresponding to the non-AP STA, the trigger dependent user info subfield comprising the SAI list subfield.

Example 10 includes the subject matter of any one of Examples 2-9, and optionally, wherein the SAI ID is configured to uniquely identify the SAI queue from other SAI queues.

Example 11 includes the subject matter of any one of Examples 2-10, and optionally, wherein the control field comprises an SAI ID count field to indicate a count of the one or more SAI ID subfields.

Example 12 includes the subject matter of any one of Examples 2-11, and optionally, wherein the control field is configured according to a field format comprising an SAI ID count field to indicate a count of the one or more SAI ID subfields, and a sequence of one or more SAI subfield blocks, wherein an SAI subfield block of the one or more SAI subfield blocks comprises the SAI ID subfield corresponding to the SAI queue and an SAI queue-size subfield corresponding to the SAI queue.

Example 13 includes the subject matter of any one of Examples 1-12, and optionally, wherein the one or more SAI queue-size subfields comprises at least a first SAI queue-size subfield and a second SAI queue-size subfield, the first SAI queue-size subfield to indicate a first queue size of a first SAI queue to queue packet segments corresponding to a first same application layer packet, the second SAI queue-size subfield to indicate a second queue size of a second SAI queue to queue packet segments corresponding to a second same application layer packet.

Example 14 includes the subject matter of any one of Examples 1-13, and optionally, wherein the MAC header comprises a Quality of Service (QoS) control field comprising a Traffic ID (TID), the one or more SAI queues to queue one or more packet segment groups belonging to the TID.

Example 15 includes the subject matter of any one of Examples 1-14, and optionally, wherein the apparatus is configured to cause the non-AP STA to determine an assignment of buffered Transmit (Tx) packets to one or more packet segment groups corresponding to one or more application layer packets, and to assign the buffered Tx packets to the one or more SAI queues based on the assignment of the buffered Tx packets to the one or more packet segment groups.

Example 16 includes the subject matter of Example 15, and optionally, wherein the apparatus is configured to cause the non-AP STA to determine the assignment of the buffered Tx packets to the one or more packet segment groups based on packet header information in packet headers of the buffered Tx packets.

Example 17 includes the subject matter of any one of Examples 1-16, and optionally, wherein the MAC header comprises a frame control field, the frame control field comprising a control frame extension subfield set to a predefined value configured to indicate presence of the control field comprising the one or more SAI queue-size subfields.

Example 18 includes the subject matter of any one of Examples 1-17, and optionally, wherein the control field comprises an extended Buffer Status Report (eBSR) control field.

Example 19 includes the subject matter of any one of Examples 1-18, and optionally, comprising at least one radio to transmit the frame to the AP.

Example 20 includes the subject matter of Example 19, and optionally, comprising one or more antennas connected to the radio, and a processor to execute instructions of an operating system.

Example 21 includes an apparatus comprising logic and circuitry configured to cause an Access Point (AP) to process a control field in a Media Access Control (MAC) header of a frame from a non-AP station (STA) to identify one or more Segment-Association-Information (SAI) queues based on one or more SAI Identifier (ID) subfields, and to identify queue sizes of the one or more SAI queues based on one or more SAI queue-size subfields, wherein an SAI ID subfield comprises an SAI ID to identify an SAI queue of the one or more SAI queues, wherein the SAI queue is to queue packet segments corresponding to a same application layer packet; determine at least one predefined SAI-related operation to be applied by the non-AP STA with respect to packet segments queued in one or more identified SAI queues of the one or more SAI queues; and transmit a trigger frame to the non-AP STA, the trigger frame comprising an SAI list subfield comprising an SAI ID list of one or more listed SAI IDs corresponding to the one or more identified SAI queues.

Example 22 includes the subject matter of Example 21, and optionally, wherein the at least one predefined SAI-related operation comprises an uplink transmission from the non-AP STA to the AP, wherein the SAI list subfield comprises a transmission (Tx) SAI ID list of one or more Tx SAI IDs for the uplink transmission, wherein the uplink transmission comprises packet segments queued in SAI queues corresponding to the one or more Tx SAI IDs.

Example 23 includes the subject matter of Example 22, and optionally, wherein the SAI list subfield comprises a Tx SAI ID count subfield configured to indicate a count of the one or more Tx SAI IDs for the uplink transmission, wherein the Tx SAI ID count subfield is before the one or more Tx SAI IDs for the uplink transmission.

Example 24 includes the subject matter of any one of Examples 21-23, and optionally, wherein the at least one predefined SAI-related operation comprises a drop operation, wherein the SAI list subfield comprises a drop SAI ID list of one or more dropped SAI IDs to be dropped at the non-AP STA, wherein the drop SAI ID list is to indicate that the non-AP STA is to drop packet segments queued in SAI queues corresponding to the one or more dropped SAI IDs.

Example 25 includes the subject matter of Example 24, and optionally, wherein the SAI list subfield comprises a drop SAI ID count subfield configured to indicate a count of the one or more dropped SAI IDs, wherein the drop SAI ID count subfield is before the one or more dropped SAI IDs.

Example 26 includes the subject matter of any one of Examples 21-25, and optionally, wherein the apparatus is configured to cause the AP to set an enhanced trigger access subfield in the trigger frame to a predefined value to indicate an enhanced trigger access functionality.

Example 27 includes the subject matter of any one of Examples 21-26, and optionally, wherein the trigger frame comprises a trigger dependent user information (info) subfield corresponding to the non-AP STA, the trigger dependent user info subfield comprising the SAI list subfield.

Example 28 includes the subject matter of any one of Examples 21-27, and optionally, wherein the SAI ID is configured to uniquely identify the SAI queue from other SAI queues.

Example 29 includes the subject matter of any one of Examples 21-28, and optionally, wherein the control field comprises an SAI ID count field to indicate a count of the one or more SAI ID subfields.

Example 30 includes the subject matter of any one of Examples 21-29, and optionally, wherein the control field is configured according to a field format comprising an SAI ID count field to indicate a count of the one or more SAI ID subfields, and a sequence of one or more SAI subfield blocks, wherein an SAI subfield block of the one or more SAI subfield blocks comprises the SAI ID subfield corresponding to the SAI queue and an SAI queue-size subfield corresponding to the SAI queue.

Example 31 includes the subject matter of any one of Examples 21-30, and optionally, wherein the one or more SAI queue-size subfields comprises at least a first SAI queue-size subfield and a second SAI queue-size subfield, the first SAI queue-size subfield to indicate a first queue size of a first SAI queue to queue packet segments corresponding to a first same application layer packet, the second SAI queue-size subfield to indicate a second queue size of a second SAI queue to queue packet segments corresponding to a second same application layer packet.

Example 32 includes the subject matter of any one of Examples 21-31, and optionally, wherein the MAC header comprises a Quality of Service (QoS) control field comprising a Traffic ID (TID), the one or more SAI queues to queue one or more packet segment groups belonging to the TID.

Example 33 includes the subject matter of any one of Examples 21-32, and optionally, wherein the MAC header comprises a frame control field, the frame control field comprising a control frame extension subfield set to a predefined value configured to indicate presence of the control field comprising the one or more SAI queue-size subfields.

Example 34 includes the subject matter of any one of Examples 21-33, and optionally, wherein the control field comprises an extended Buffer Status Report (eBSR) control field.

Example 35 includes the subject matter of any one of Examples 21-34, and optionally, comprising at least one radio to transmit the trigger frame to the non-AP STA.

Example 36 includes the subject matter of Example 35, and optionally, comprising one or more antennas connected to the radio, and a processor to execute instructions of an operating system.

Example 37 includes a wireless communication device comprising the apparatus of any of Examples 1-36.

Example 38 includes a mobile device comprising the apparatus of any of Examples 1-36.

Example 39 includes an apparatus comprising means for executing any of the described operations of any of Examples 1-36.

Example 40 includes a product comprising one or more tangible computer-readable non-transitory storage media comprising instructions operable to, when executed by at least one processor, enable the at least one processor to cause a wireless communication device to perform any of the described operations of any of Examples 1-36.

Example 41 includes an apparatus comprising: a memory interface; and processing circuitry configured to: perform any of the described operations of any of Examples 1-36.

Example 42 includes a method comprising any of the described operations of any of Examples 1-36.

Functions, operations, components and/or features described herein with reference to one or more aspects, may be combined with, or may be utilized in combination with, one or more other functions, operations, components and/or features described herein with reference to one or more other aspects, or vice versa.

While certain features have been illustrated and described herein, many modifications, substitutions, changes, and equivalents may occur to those skilled in the art. It is, therefore, to be understood that the appended claims are intended to cover all such modifications and changes as fall within the true spirit of the disclosure.

## Claims

1. A method to be performed at a non Access Point (AP) (non-AP) station (STA), the method comprising:
setting one or more Segment-Association-Information (SAI) queue-size subfields in a control field, the one or more SAI queue-size subfields to indicate queue sizes of one or more SAI queues at the non-AP STA, wherein an SAI queue of the one or more SAI queues is to queue packet segments corresponding to a same application layer packet; and
transmitting a frame to an AP, wherein a Media Access Control (MAC) header of the frame comprises the control field.

2. The method of claim 1, wherein the control field comprises one or more SAI Identifier (ID) subfields corresponding to the one or more SAI queues, wherein an SAI ID subfield corresponding to the SAI queue comprises an SAI ID to identify the SAI queue.

3. The method of claim 2 comprising:
processing an SAI list subfield in a trigger frame from the AP to identify an SAI ID list of one or more listed SAI IDs corresponding to a predefined SAI-related operation; and
performing the predefined SAI-related operation with respect to packet segments queued in SAI queues corresponding to the one or more listed SAI IDs.

4. The method of claim 3 comprising identifying that the trigger frame comprises the SAI list subfield based on a determination that an enhanced trigger access subfield in the trigger frame is set to a predefined value to indicate an enhanced trigger access functionality.

5. The method of claim 3 or 4, wherein the trigger frame comprises a trigger dependent user information (info) subfield corresponding to the non-AP STA, the trigger dependent user info subfield comprising the SAI list subfield.

6. The method of claim 2 comprising:
processing an SAI list subfield in a trigger frame from the AP to identify a transmission (Tx) SAI ID list of one or more Tx SAI IDs for an uplink transmission to the AP; and
transmitting an uplink transmission to the AP based on the trigger frame, the uplink transmission comprising packet segments queued in SAI queues corresponding to the one or more Tx SAI IDs.

7. The method of claim 6, wherein the SAI list subfield comprises a Tx SAI ID count subfield configured to indicate a count of the one or more Tx SAI IDs for the uplink transmission to the AP, wherein the Tx SAI ID count subfield is before the one or more Tx SAI IDs for the uplink transmission to the AP.

8. The method of claim 2 comprising:
processing an SAI list subfield in a trigger frame from the AP to identify a drop SAI ID list of one or more dropped SAI IDs to be dropped at the non-AP STA; and
dropping packet segments queued in SAI queues corresponding to the one or more dropped SAI IDs.

9. The method of claim 8, wherein the SAI list subfield comprises a drop SAI ID count subfield configured to indicate a count of the one or more dropped SAI IDs, wherein the drop SAI ID count subfield is before the one or more dropped SAI IDs.

10. The method of any one of claims 2-9, wherein the control field comprises an SAI ID count field to indicate a count of the one or more SAI ID subfields.

11. The method of any one of claims 1-10, wherein the one or more SAI queue-size subfields comprises at least a first SAI queue-size subfield and a second SAI queue-size subfield, the first SAI queue-size subfield to indicate a first queue size of a first SAI queue to queue packet segments corresponding to a first same application layer packet, the second SAI queue-size subfield to indicate a second queue size of a second SAI queue to queue packet segments corresponding to a second same application layer packet.

12. The method of any one of claims 1-11, wherein the MAC header comprises a Quality of Service (QoS) control field comprising a Traffic ID (TID), the one or more SAI queues to queue one or more packet segment groups belonging to the TID.

13. An apparatus comprising a controller configured to cause a non Access Point (AP) (non-AP) station (STA) to perform the method of any one of claims 1-12.

14. The apparatus of claim 13 comprising at least one radio to transmit the frame to the AP, one or more antennas connected to the radio, and a processor to execute instructions of an operating system.

15. A product comprising one or more tangible computer-readable non-transitory storage media comprising instructions operable to, when executed by at least one processor, enable the at least one processor to cause a non Access Point (AP) (non-AP) station (STA) to perform the method of any one of claims 1-12.
